# EUROPEAN PATENT APPLICATION

(11) **EP 2 730 953 A1**
(43) Date of publication of application: **14.05.2014**
(21) Application number: 12807606.4
(22) Date of filing: 04.07.2012
(51) Int. Cl.: G02B 1/04, C08F 210/00, C08F 232/00

(54) **MOLDED ARTICLE, MOLDING MATERIAL, OPTICAL COMPONENT, AND METHOD FOR PRODUCING MOLDING MATERIAL**

(30) Priority: 06.07.2011 JP 2011150329; 15.07.2011 JP 2011156945
(71) Applicant: Mitsui Chemicals, Inc., Tokyo 105-7117 (JP)
(72) Inventor: YOSHIMOTO, Emi, Sodegaura-shi Chiba 299-0265 (JP); TANAKA, Tooru, Sodegaura-shi Chiba 299-0265 (JP)
(74) Representative: HOFFMANN EITLE
(86) International application number: PCT/JP2012/004335
(87) International publication number: WO 2013/005429

(57) **Abstract**

The molded product of the present invention is used for an optical component selected from an fθ lens, an imaging lens, and a light guide plate and contains a polymer having an alicyclic structure in a portion or all of repeating structural units. Moreover, when the molded product is dipped in cyclohexane at a concentration of 1 g/mL at 23°C for 6 hours under stirring, a number of insoluble fine particles contained in the cyclohexane and having a particle size of equal to or larger than 1 µm and equal to or smaller than 2 µm that is measured by a liquid-borne particle counter is equal to or less than 200 particles /ml.

## Description

### TECHNICAL FIELD

The present invention relates to a molded product, a molding material, an optical component, and a method of producing a molding material.

### BACKGROUND ART

As a molding material for optical components, a molding material which contains a polymer having an alicyclic structure as a main component is known (see Patent Document 1). The molding material which contains such a polymer as a main component has an advantage that makes it possible to produce optical components by injection molding at low cost.

Patent Document 1 discloses a molding material which contains a polymer having an alicyclic structure in a portion or all of repeating structural units, a phenol-based stabilizer, a hindered amine-based light stabilizer, and a phosphorus-based stabilizer, wherein at least a portion of the phenol-based stabilizer and/or the hindered amine-based light stabilizer is present in a state of being attached onto the surface of particles including the polymer.

The document discloses that it is possible to obtain an optical component which has sufficient optical performances, does not easily deteriorate even being used in a light source of a region close to ultraviolet rays, and can maintain a high performance or a high degree of light transmittance when being used. The document also discloses that for the above reason, the optical component is suitable for an optical pick-up device using a blue-violet laser beam source.

### RELATED DOCUMENT

### PATENT DOCUMENT

[Patent Document 1] Pamphlet of International Publication WO. 2006/123679

### DISCLOSURE OF THE INVENTION

However, when being used for optical components such as an fθ lens and an imaging lens, a molded product obtained using the molding material which contains such a polymer having an alicyclic structure as a main component cannot identify images well in some cases. Moreover, when the molded product is used for optical components such as a light guide plate, sometimes problems arise in displaying information.

The present inventors conducted thorough investigation regarding the cause of such problems, and as a result, they found that a dent formed on the surface of the optical components is the cause. If optical components have a dent on the surface thereof, the optical path changes, and images become blurry, whereby the images cannot be identified well. Moreover, the amount of light changes, so information is not clearly displayed.

As described above, the molded product obtained using a molding material which contains the polymer having an alicyclic structure as a main component has been mainly used for a lens used in an optical pick-up device. The lens for the optical pick-up device just needs to be able to identify 0 or 1 which is an optical signal. Accordingly, even if the lens has a dent on the surface, the above trouble does not easily become a problem.

On the other hand, since an fθ lens, an imaging lens, or a light guide plate needs to identify images with a high accuracy, if there is a dent on the surface of the molded product, the above trouble becomes a problem. Therefore, there is a demand for a molded product in which the formation of a dent on the surface is inhibited.

Meanwhile, the formation of a dent on the surface of the molded product can be inhibited to some extent, by changing the conditions of injection molding. However, this is not preferable since doing such thing influences physical properties such as the shape of the molded product, depending on the conditions of injection molding. Consequently, there is a demand for a molding material which makes it possible to obtain a molded product in which the formation of a dent on the surface is inhibited under a wide range of conditions of injection molding.

Therefore, the present invention aims to provide a molded product for optical components that has excellent appearance quality.

According to the present invention, a molded product, a molding material, an optical component, and a method of producing a molding material shown below are provided.
(1) A molded product which is used for an optical component selected from an fθ lens, an imaging lens, and a light guide plate and including a polymer having an alicyclic structure in a portion or all of repeating structural units, wherein when the molded product is dipped in cyclohexane at a concentration of 1 g/mL at 23°C for 6 hours under stirring, a number of insoluble fine particles contained in the cyclohexane and having a particle size of equal to or larger than 1 µm and equal to or smaller than 2 µm that is measured by a liquid-borne particle counter is equal to or less than 200 particles/ml.
(2) The molded product according to (1), wherein the polymer is a cyclic olefin-based polymer having one or more kinds of structures represented by the following General Formula (1). 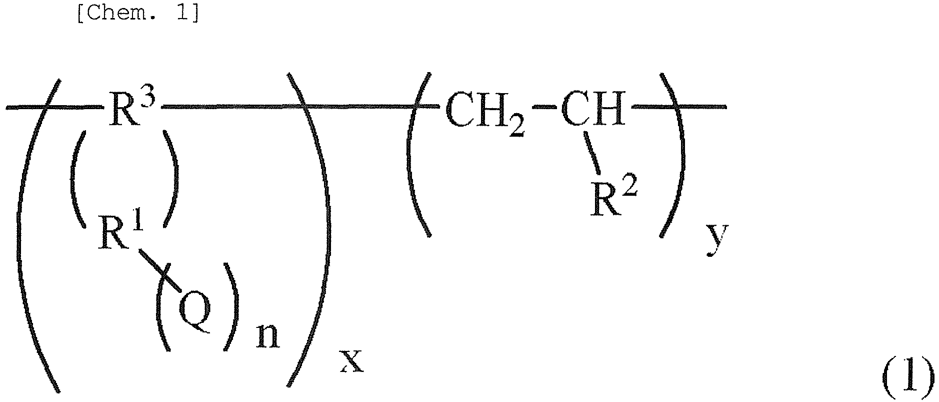
   (In the formula, x and y represent a copolymerization ratio and are real numbers satisfying 0/100 ≤ y/x ≤95/5. x and y are based on mole.
   n represents a number of substituents of a substituent Q and is a real number satisfying 0 ≤ n ≤ 2.
   R¹ represents a group which has a valency 2 + n and is selected from a group consisting of hydrocarbon groups having 2 to 20 carbon atoms.
   R² represents a hydrogen atom or a monovalent group selected from a group consisting of hydrocarbon groups having 1 to 10 carbon atoms.
   R³ represents a quadrivalent group selected from a group consisting of hydrocarbon groups having 2 to 10 carbon atoms.
   Q represents COOR⁴ (R⁴ represents a hydrogen atom or a monovalent group selected from a group consisting of hydrocarbon groups having 1 to 10 carbon atoms).
   One kind of R¹, R², R³, and Q may be contained respectively in the polymer, or two or more kinds of these may be contained in the polymer at any ratio.)
(3) The molded product according to (1), wherein the polymer is a cyclic olefin-based polymer having one or more kinds of structures represented by the following General Formula (2). 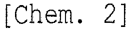 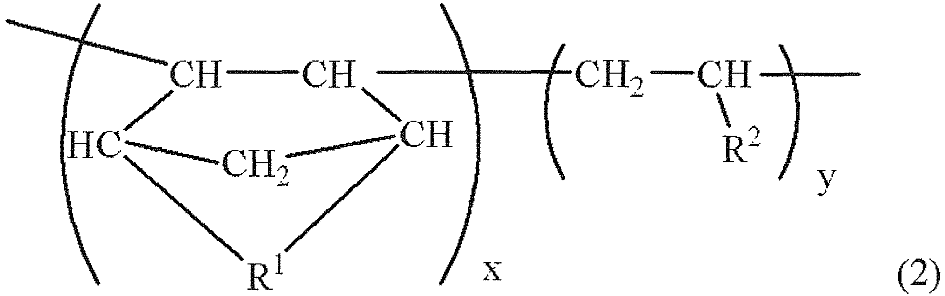
   (In the formula, R¹ represents a divalent group selected from a group consisting of hydrocarbon groups having 2 to 20 carbon atoms.
   R² represents a hydrogen atom or a monovalent group selected from a group consisting of hydrocarbon groups having 1 to 10 carbon atoms.
   One kind of R¹ and R² may be contained respectively in the polymer, or two or more kinds of these may be contained in the polymer at any ratio.
   x and y represent a copolymerization ratio and are real numbers satisfying 5/95 ≤ y/x ≤ 95/5. x and y are based on mole.)
(4) The molded product according to (1), wherein the polymer is a copolymer including tetracyclo[4.4.0.1^{2,5}.1^{7,10}]-3-dodecene and ethylene.
(5) A molding material which is used for an optical component selected from an fθ lens, an imaging lens, and a light guide plate and including a polymer having an alicyclic structure in a portion or all of repeating structural units and additives, wherein at least a portion of the additives is present on the surface of particles containing the polymer.
(6) The molding material according to (5), wherein the particles containing the polymer are shaped like pellets.
(7) The molding material according to (5) or (6), wherein the additives present on the surface of the particles are at least one or more kinds selected from a group consisting of a phenol-based stabilizer, a higher fatty acid metal salt, an antioxidant, an ultraviolet absorber, a hindered amine-based light stabilizer, a hydrochloric acid absorber, a metal deactivator, an antistatic agent, an anti-fog agent, a lubricant, a slip agent, a nucleating agent, a plasticizer, and a flame retardant.
(8) The molding material according to any one of (5) to (7), wherein a melt viscosity at 130°C of the additives present on the surface of the particles is equal to or higher than 100 mPa·s and equal to or lower than 10000 mPa·s, and an average particle size d₅₀ of the additives is equal to or less than 1000 µm.
(9) The molding material according to any one of (5) to (8), wherein a value which is obtained by subtracting a temperature of a phase transition point of the additives present on the surface of the particles from a temperature of a phase transition point of the polymer is equal to or higher than -100 °C and equal to or lower than 140°C.
(10) The molding material according to any one of (5) to (9), wherein provided that the amount of the polymer contained in the molding material is 100 parts by mass, the additives are present on the surface of the particles, in an amount ranging from 0.01 parts by mass to 50 parts by mass.
(11) The molding material according to any one of (5) to (10), wherein provided that the total amount of the molding material is 100 parts by mass, the additives are present on the surface of the particles, in an amount ranging from 0.01 parts by mass to 50 parts by mass.
(12) The molding material according to any one of (5) to (11), wherein the additives are fused onto the surface of the particles.
(13) The molding material according to (12) that is obtained by heating the particles with surface onto which the additives are attached, at a temperature equal to or higher than (Tm₁ - 20) °C and equal to or lower than (Tm₂ + 20) °C (herein, Tm₁ and Tm₂ respectively represent the lower limit and the upper limit of a melting point of the additives).
(14) The molding material according to any one of (5) to (13), wherein the polymer is a cyclic olefin-based polymer having one or more kinds of structures represented by the following General Formula (1). 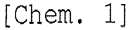 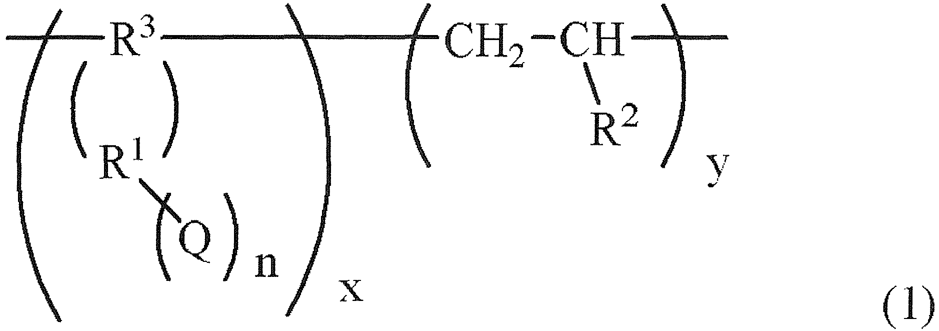
   (In the formula, x and y represent a copolymerization ratio and are real numbers satisfying 0/100 ≤ y/x ≤95/5. x and y are based on mole.
   n represents a number of substituents of a substituent Q and is a real number satisfying 0 ≤ n ≤ 2.
   R¹ represents a group which has a valency of 2 + n and is selected from a group consisting of hydrocarbon groups having 2 to 20 carbon atoms.
   R² represents a hydrogen atom or a monovalent group selected from a group consisting of hydrocarbon groups having 1 to 10 carbon atoms.
   R³ represents a quadrivalent group selected from a group consisting of hydrocarbon groups having 2 to 10 carbon atoms.
   Q represents COOR⁴ (R⁴ represents a hydrogen atom or a monovalent group selected from a group consisting of hydrocarbon groups having 1 to 10 carbon atoms).
   One kind of R¹, R², R³, and Q may be contained respectively in the polymer, or two or more kinds of these may be contained in the polymer at any ratio.)
(15) The molding material according to any one of (5) to (13), wherein the polymer is a cyclic olefin-based polymer having one or more kinds of structures represented by the following General Formula (2). 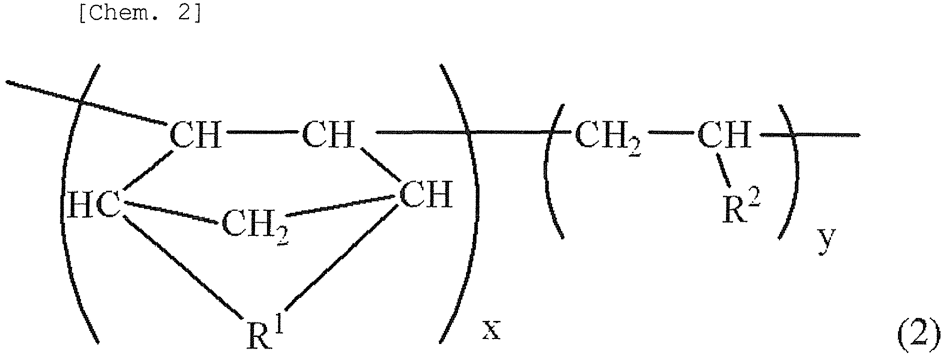
   (In the formula, R¹ represents a divalent group selected from a group consisting of hydrocarbon groups having 2 to 20 carbon atoms.
   R² represents a hydrogen atom or a monovalent group selected from a group consisting of hydrocarbon groups having 1 to 10 carbon atoms.
   One kind of R¹ and R² may be contained respectively in the polymer, or two or more kinds of these may be contained in the polymer at any ratio.
   x and y represent a copolymerization ratio and are real numbers satisfying 5/95 ≤ y/x ≤ 95/5. x and y are based on mole.)
(16) The molding material according to any one of (5) to (13), wherein the polymer is a copolymer including tetracyclo [4.4.0.1^{2,5}.1^{7,10}]-3-dodecene and ethylene.
(17) A molded product obtained by performing melt molding on the molding material according to any one of (5) to (16).
(18) An optical component including the molded product according to (17).
(19) The optical component according to (18) that is an fθ lens, an imaging lens, or a light guide plate.
(20) A method of producing the molding material according to any one of (5) to (16), including a step of attaching the additives onto the surface of the particles, or a step of attaching the additives onto the surface of the particles and then fusing the additives to the surface of the particles.
(21) The method of producing the molding material according to (20), wherein in the step of attaching the additives, provided that the amount of the polymer contained in the molding material is 100 parts by mass, the additives are attached onto the surface of the particles, in an amount ranging from 0.01 parts by mass to 50 parts by mass.
(22) The method of producing the molding material according to (20) or (21), wherein in the step of fusing the additives to the particles, the particles with surface onto which the additives have been attached are heated at a temperature ranging from (Tm₁ - 20) °C to (Tm₂ + 20) °C such that the additives are fused onto the surface of the particles (herein, Tm₁ and Tm₂ respectively represent the lower limit and the upper limit of a melting point of the additives).

### EFFECT OF THE INVENTION

According to the present invention, it is possible to provide a molded product for optical components that has excellent appearance quality.

### DESCRIPTION OF EMBODIMENTS

The object described above as well as other objects, characteristics, and advantages are further clarified by preferable embodiments described below.

Hereinafter, embodiments of the present invention will be described in detail. In addition, unless otherwise specified, "to" indicates a range including a value before "to" to as a lower limit and a value after "to" as an upper limit.

### (Molded product)

The molded product of the present invention is used for an optical component selected from an fθ lens, an imaging lens, and a light guide plate and contains a polymer having an alicyclic structure in a portion of or all of repeating structural units. In addition, when the molded product is dipped in cyclohexane at a concentration of 1 g/mL at 23 °C for 6 hours under stirring, the number of insoluble fine particles, which are contained in the cyclohexane and have a particle size of equal to or larger than 1 µm and equal to or smaller than 2 µm, measured by a liquid-borne particle counter is equal to or less than 200 particles /ml, preferably equal to or less than 150 particles /ml, more preferably equal to or less than 120 particles /ml, even more preferably equal to or less than 100 particles /ml, and particularly preferably equal to or less than 80 particles /ml.

If the number of the insoluble particles is equal to or less than the above upper limit, the formation of a dent on the surface of the molded product is inhibited. The reason why the formation of a dent on the surface of the molded product is inhibited is assumed to be as below, though this is not a solid reason.

In the molded product in which the number of the insoluble fine particles exceeds the above upper limit, a relatively large number of insoluble fine particles are present on the surface contacting a mold, when the molding material is transferred into the mold. If a large number of insoluble fine particles are present on the surface contacting the mold, transfer of the molding material into a mold is hindered due to those insoluble fine particles. It is considered that for this reason, a dent may be formed on the surface of the obtained molding.

On the other hand, in the molded product of the present invention, the number of the insoluble fine particles is equal to or less than the above upper limit. Therefore, it is possible to inhibit the phenomenon in which the transfer of the molding material into a mold is hindered due to the insoluble fine particles. It is considered that for this reason, formation of a dent on the surface of the molded product of the present invention may be inhibited.

Herein, presumably, the insoluble fine particles may be, for example, a substance derived from a polymer or a degraded product of a polymer. Due to the effect of a lubricant, the molding material of the present embodiment described later is inhibited from being sheared at the time of plasticizing of pellets. Presumably, for this reason, formation of a substance derived from a polymer, a degraded product of a polymer, and the like may be inhibited, and the number of the insoluble fine particles can be controlled not to be greater than the above upper limit.

### (Polymer)

The polymer used in the molded product of the present embodiment has an alicyclic structure in a portion or all of repeating structural units.

The polymer of the present embodiment is preferably selected from polymers represented by the following General Formula (1). 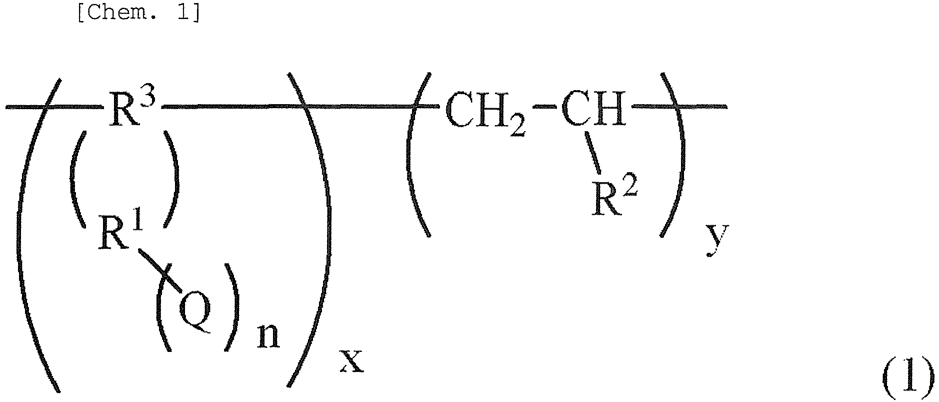
(In the formula, x and y represent a copolymerization ratio and are real numbers satisfying 0/100 ≤ y/x ≤95/5. x and y are based on mole.
n represents a number of substituents of a substituent Q and is a real number satisfying 0 ≤ n ≤ 2.
R¹ represents a group which has a valency of 2 + n and is selected from a group consisting of hydrocarbon groups having 2 to 20 carbon atoms.
R² represents a hydrogen atom or a monovalent group selected from a group consisting of hydrocarbon groups having 1 to 10 carbon atoms.
R³ represents a quadrivalent group selected from a group consisting of hydrocarbon groups having 2 to 10 carbon atoms.
Q represents COOR⁴ (R⁴ represents a hydrogen atom or a monovalent group selected from a group consisting of hydrocarbon groups having 1 to 10 carbon atoms).
One kind of R¹, R², R³, and Q may be contained respectively in the polymer, or two or more kinds of these may be contained in the polymer at any ratio.)

Regarding the respective signs in the General Formula (1), the following preferable conditions can be exemplified, and these conditions are used by being optionally combined with each other.
[1] A group represented by R¹ is a group having at least one cyclic structure in the structure.
[2] R³ represents a group having an example structure (a), (b), or (c) as an example (case where n = 0) of the structural unit containing this group; 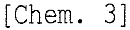 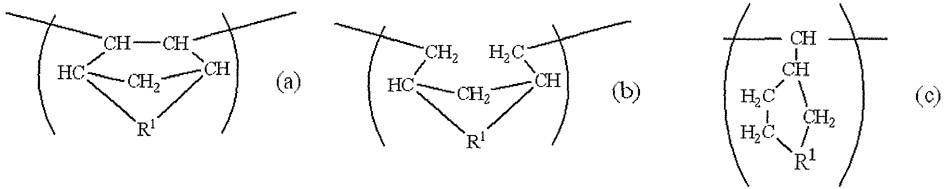
   Here, R¹ in the formula has the same definition as described above.
[3] n represents 0.
[4] y/x represents a real number satisfying 5/95 ≤ y/x ≤95/5.
[5] R² represents a hydrogen atom and/or -CH₃.
[6] Q represents a -COOH or -COOCH₃ group.

Among these, regarding the respective signs in the General Formula (1), the following conditions can be most preferably exemplified, and these conditions are used by being optionally combined with each other.
[1] A group represented by R¹ is a divalent group represented by General Formula (3); 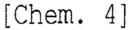 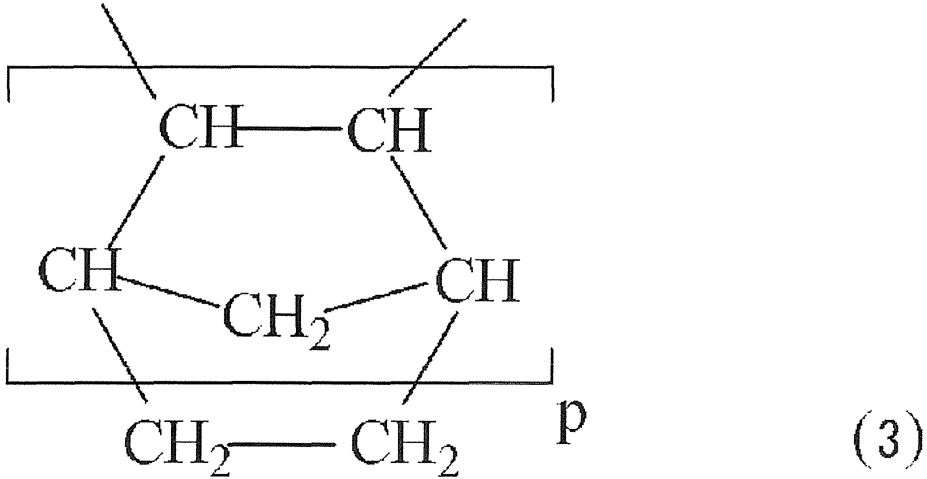
   (In the formula, p represents an integer of 0 to 2.)
   The group is more preferably a divalent group in which p in the General Formula (3) represents 1.
[2] A group represented by R³ has the example structure (a) as an example (case where n = 0) of the structural unit containing this group.

In addition, the type of polymerization is not restricted at all in the present embodiment, and various known types of polymerization such as addition polymerization and ring-opening polymerization can be applied. Examples of the addition polymerization include random copolymerization, block copolymerization, alternating copolymerization, and the like. In the present embodiment, in view of inhibiting deterioration of optical performances, it is preferable to use random copolymer.

If the resin used as a main component has the above structure, optical properties such as transparency, a refractive index, and birefringence become excellent, and high-accuracy optical components can be obtained.

### (Examples of polymer having alicyclic structure in a portion or all of repeating structural units)

The polymers represented by the General Formula (1) are roughly classified into 4 types of polymers including the following (i) to (iv).
(i) A copolymer of ethylene or an α-olefin with a cyclic olefin
(ii) A ring-opened polymer or a hydrogenated product thereof
(iii) A polystyrene derivative or a hydrogenated product thereof
(iv) Other polymers

Hereinafter, these will be described in order.

### [(i) Copolymer of ethylene or α-olefin with cyclic olefin]

The (i) copolymer of ethylene or an α-olefin with a cyclic olefin is a cyclic olefin-based copolymer represented by General Formula (2). The copolymer includes, for example, a structural unit (A) derived from ethylene or a linear or branched α-olefin having 3 to 30 carbon atoms and a structural unit (B) derived from a cyclic olefin. 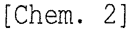 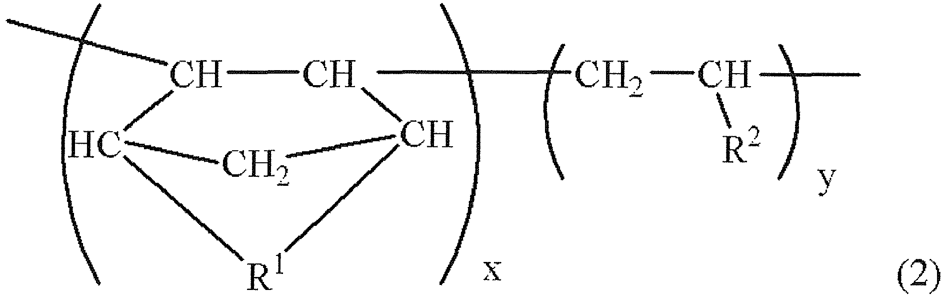
In General Formula (2), R¹ represents a divalent group selected from a group consisting of hydrocarbon groups having 2 to 20 carbon atoms and preferably having 2 to 12 carbon atoms.
R² represents a hydrogen atom or a monovalent group selected from a group consisting of hydrocarbon groups having 1 to 10 carbon atoms and preferably having 1 to 5 carbon atoms.
One kind of R¹ and R² may be contained respectively in the polymer, or two or more kinds of these may be contained in the polymer at any ratio.
x and y represent a copolymerization ratio and are real numbers satisfying 5/95 ≤ y/x ≤95/5. x and y preferably satisfy 50/50 ≤ y/x ≤95/5 and more preferably satisfy 55/45 ≤ y/x ≤80/20. x and y are based on mole.

### (Structural unit (A) derived from ethylene or α-olefin)

The structural unit (A) derived from ethylene or an α-olefin is a structural unit derived from the following ethylene or linear or branched α-olefin having 3 to 30 carbon atoms.

Specific examples thereof include ethylene, propylene, 1-butene, 1-pentene, 1-hexene, 3-methyl-1-butene, 3-methyl -1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, and the like. Among these, ethylene is preferable. The polymer may contain two or more kinds of the structural unit derived from ethylene or an α-olefin, within a range that does not diminish the effects of the present invention.

### (Structural unit (B) derived from cyclic olefin)

The structural unit (B) derived from a cyclic olefin includes at least one or more kinds selected from a group consisting of structural units derived from cyclic olefins represented by the following General Formulae (4), (5), and (6).

The structural unit (B) derived from the cyclic olefin represented by General Formula (4) has the following structure.

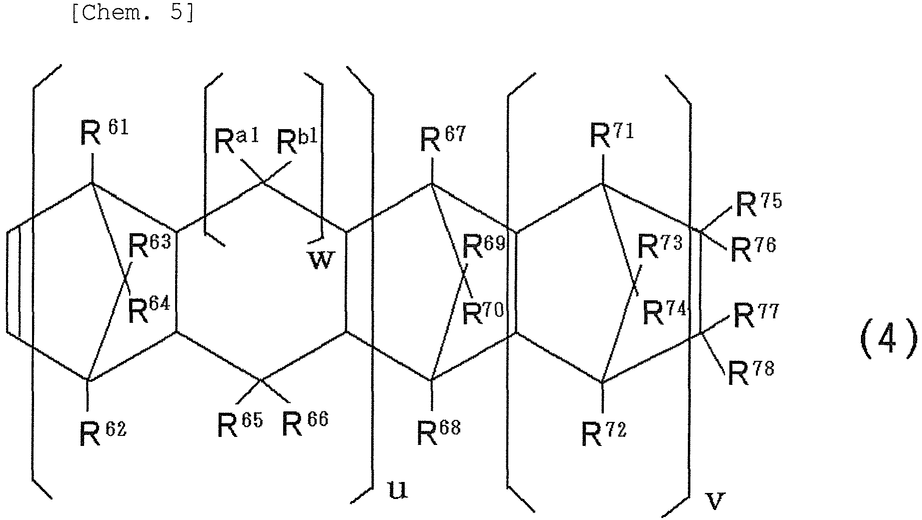

In General Formula (4), u represents 0 or 1, v represents 0 or a positive integer, and w represents 0 or 1. When w represents 1, a ring represented using w is a 6-membered ring, and when w represents 0, the ring is a 5-membered ring. R⁶¹ to R⁷⁸ as well as R^{a1} and R^{b1} may be the same as or different from each other and represent a hydrogen atom, a halogen atom, or a hydrocarbon group.

Examples of the halogen atom include a fluorine atom, a chlorine atom, a bromine atom, and an iodine atom. Examples of the hydrocarbon group generally include an alkyl group having 1 to 20 carbon atoms, a halogenated alkyl group having 1 to 20 carbon atoms, a cycloalkyl group having 3 to 15 carbon atoms, an aromatic hydrocarbon group, and the like.

More specific examples of the alkyl group include a methyl group, an ethyl group, a propyl group, an isopropyl group, an amyl group, a hexyl group, an octyl group, a decyl group, a dodecyl group, an octadecyl group, and the like. Examples of the halogenated alkyl group include groups formed when the alkyl group having 1 to 20 carbon atoms is substituted with one or plural halogen atoms. Examples of the cycloalkyl group include a cyclohexyl group and the like, and examples of the aromatic hydrocarbon group include a phenyl group, a naphthyl group, and the like.

In the General Formula (4), R⁷⁵ and R⁷⁶, R⁷⁷ and R⁷⁸, R⁷⁵ and R⁷⁷, R⁷⁶ and R⁷⁸, R⁷⁵ and R⁷⁸, or R⁷⁶ and R⁷⁷ may bind to each other respectively, in other words, cooperate with each other to form a monocyclic or polycyclic group. Moreover, the monocyclic or polycyclic ring formed in this manner may have a double bond. In view of thermal resistance, the polycyclic ring is more preferable, since a copolymer having a high glass transition temperature (Tg) is obtained with a smaller content of the polycyclic ring than the monocyclic ring. In addition, the polycyclic ring has an advantage that makes it possible to produce the polymer with a small amount of the cyclic olefin added. Herein, specific examples of the formed monocyclic or polycyclic group include the following.

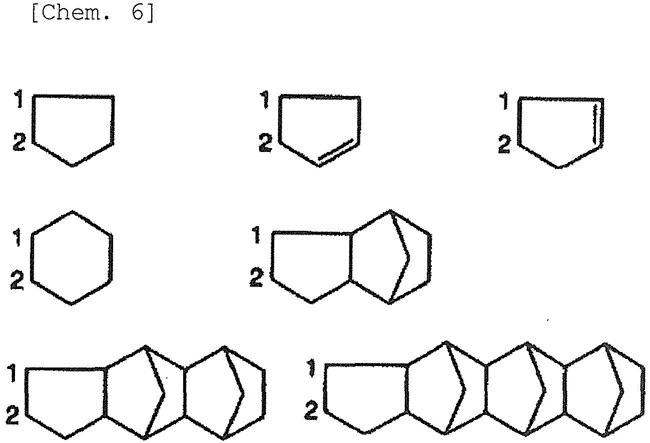

In the above examples, carbon atoms marked with a number 1 or 2 represent carbon atoms binding to R⁷⁵(R⁷⁶) or R⁷⁷(R⁷⁸) respectively in the General Formula (4).

R⁷⁵ and R⁷⁶ or R⁷⁷ and R⁷⁸ may form an alkylidene group. The alkylidene group generally has 2 to 20 carbon atoms. Specific examples of the alkylidene group include an ethylidene group, a propylidene group, an isopropylidene group, and the like.

The structural unit (B) derived from the cyclic olefin represented by General Formula (5) has the following structure.

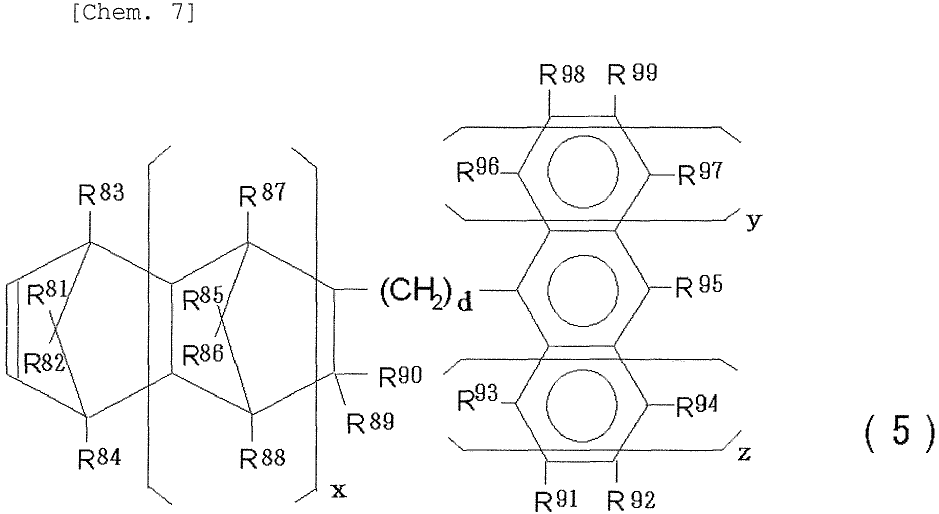

In General Formula (5), x and d represent 0 or a positive integer equal to or greater than 1, and y and z represent 0, 1, or 2. R⁸¹ to R⁹⁹ may be the same as or different from each other, and represent a hydrogen atom, a halogen atom, an aliphatic hydrocarbon group, an aromatic hydrocarbon group, or an alkoxy group. A carbon atom binding to R⁸⁹ and R⁹⁰ may bind to a carbon atom binding to R⁹³ or a carbon atom binding to R⁹¹, directly or through an alkylene group having 1 to 3 carbon atoms. When y = z = 0, R⁹⁵ and R⁹² or R⁹⁵ and R⁹⁹ may bind to each other to form a monocyclic or polycyclic aromatic ring.

Examples of the halogen atom include the same halogen atom as in the General Formula (4).

Examples of the aliphatic hydrocarbon group include an alkyl group having 1 to 20 carbon atoms and a cycloalkyl group having 3 to 15 carbon atoms. More specific examples of the alkyl group include a methyl group, an ethyl group, a propyl group, an isopropyl group, an amyl group, a hexyl group, an octyl group, a decyl group, a dodecyl group, an octadecyl group, and the like. Examples of the cycloalkyl group include a cyclohexyl group and the like.

Examples of the aromatic hydrocarbon group include an aryl group, an aralkyl group, and the like. Specific examples thereof include phenyl, tolyl, naphthyl, benzyl, phenylethyl, and the like.

Examples of the alkoxy group include a methoxy group, an ethoxy group, a propoxy group, and the like. Herein, the carbon atom binding to R⁸⁹ and R⁹⁰ may bind to the carbon atom binding to R⁹³ or the carbon atom binding to R⁹¹, directly or through an alkylene group having 1 to 3 carbon atoms. That is, when the above two carbon atoms bind to each other through the alkylene group, R⁸⁹ and R⁹³ or R⁹⁰ and R⁹¹ cooperate with each other to form any alkylene group among a methylene group (-CH₂)-, an ethylene group (-CH₂CH₂-), and a propylene group (-CH₂CH₂CH₂-).

Moreover, when y = z = 0, R⁹⁵ and R⁹² or R⁹⁵ and R⁹⁹ may bind to each other to form a monocyclic or polycyclic aromatic ring. Specific examples thereof include the following aromatic rings that are formed by R⁹⁵ and R⁹² when y = z = 0. In view of thermal resistance, the polycyclic ring is more preferable, since a copolymer having a high glass transition temperature (Tg) is obtained with a smaller content of the polycyclic ring than the monocyclic ring. In addition, the polycyclic ring has an advantage that makes it possible to produce the polymer with a small amount of the cyclic olefin added.

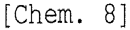

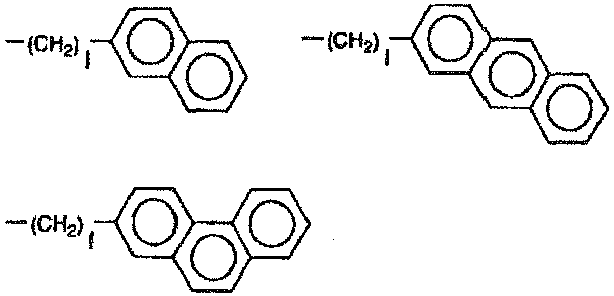

l is the same as d in the General Formula (5).

The structural unit (B) derived from the cyclic olefin represented by General Formula (6) has the following structure.

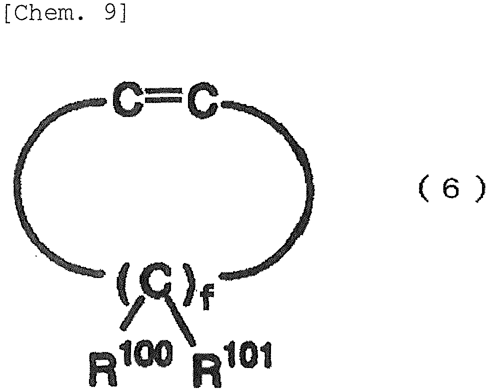

In General Formula (6), R¹⁰⁰ and R¹⁰¹ may be the same as or different from each other and represent a hydrogen atom or a hydrocarbon group having 1 to 5 carbon atoms. f represents an integer satisfying 1 ≤ f ≤ 18. Preferable examples of the hydrocarbon group having 1 to 5 carbon atoms include an alkyl group, a halogenated alkyl group, a cycloalkyl group, and the like. Specific examples of these are clearly described in the specific examples of R⁶¹ to R⁷⁸ in the Formula (4).

Specific examples of the structural unit (B) derived from the cyclic olefin represented by General Formula (4), (5), or (6) include a bicyclo-2-heptene derivative (bicyclohept-2-ene derivative), a tricyclo-3-decene derivative, a tricyclo-3-undecene derivative, a tetracyclo-3-dodecene derivative, a pentacyclo-4-pentadecene derivative, a pentacyclopentadecadiene derivative, a pentacyclo-3-pentadecene derivative, a pentacyclo-4-hexadecene derivative, a pentacyclo-3-hexadecene derivative, a hexacyclo-4-heptadecene derivative, a heptacyclo-5-eicosene derivative, a heptacyclo-4-eicosene derivative, a heptacyclo-5-heneicosen derivative, an octacyclo-5-docosene derivative, a nonacyclo-5-pentacosene derivative, a nonacyclo-6-hexacosene derivative, a derivative of cyclopentadiene-acenaphthylene adduct, a 1,4-methano-1,4,4a,9a-tetrahydrofluorene derivative, a 1,4-methano-1,4,4a,5,10,10a-hexahydroanthracene derivative, a cycloalkylene derivative having 3 to 20 carbon atoms, and the like.

Among the structural unit (B) derived from the cyclic olefin represented by the General Formula (4), (5), or (6), a tetracyclo[4.4.0.^{12,5}.1^{7,10}]-3-dodecene derivative and a hexacyclo[6.6.1.1^{3,6}.1^{10,13}.0^{2,7}.0^{9,14}]-4-heptadecene derivative are preferable, and a tetracyclo[4.4.0.1^{2,5}.1^{7,10}]-3-dodecene is particularly preferable.

The structural unit (B) derived from the cyclic olefin represented by the General Formula (4) or (5) can be produced by causing the Diels-Alder reaction between cyclopentadiene and olefins having a structure corresponding thereto. The copolymer may contain two or more kinds of the structural unit (B) derived from the cyclic olefin represented by General Formula (4), (5), or (6). Moreover, those polymerized using the above monomer can be optionally modified, and in this case, the structure of the structural unit derived from the monomer can be changed. For example, by hydrogenation treatment, a benzene ring or the like in the structural unit derived from the monomer can be changed into a cyclohexyl ring depending on the condition.

In the present embodiment, the [(i) copolymer of ethylene or an α-olefin with a cyclic olefin] is preferably a copolymer including ethylene and tetracyclo [4.4.0.1^{2,5}.1^{7,10}]-3-dodecene.

In addition, the type of copolymerization is not restricted at all in the present embodiment, and various known types of copolymerization such as random copolymerization, block copolymerization, and alternating copolymerization can be applied. Among these, random copolymerization is preferable.

### [(ii) Ring-opened polymer or hydrogenated product thereof]

The (ii) ring-opened polymer or a hydrogenated product thereof refers to a cyclic olefin polymer containing the structural unit represented by the above example structure (b), among the structures described as preferable examples in the General Formula (1).

The cyclic olefin polymer may have a polar group. Examples of the polar group include a hydroxyl group, a carboxyl group, an alkoxy group, an epoxy group, a glycidyl group, an oxycarbonyl group, a carbonyl group, an amino group, an ester group, and the like.

The cyclic olefin polymer is generally obtained by polymerizing a cyclic olefin. Specifically, it is obtained by performing ring-opening polymerization on an alicyclic olefin. Moreover, the cyclic olefin polymer having a polar group is obtained by, for example, introducing a compound having a polar group into the cyclic olefin polymer by a modification reaction, or by copolymerizing a polar group-containing monomer as a copolymerization component.

Specific examples of the alicyclic olefin used for obtaining the cyclic olefin polymer include norbornene-based monomers such as bicyclo{2.2.1}-hept-2-ene (trivial name: norbornene), 5-methyl-bicyclo{2.2.1]-hept-2-ene, 5,5-dimethyl-bicyclo{2.2.1}-hept-2-ene, 5-ethyl-bicyclo{2.2.1}-hept-2-ene, 5-butyl-bicyclo{2.2.1}-hept-2-ene, 5-hexyl-bicyclo{2.2.1}-hept-2-ene,5-octyl-bicyclo{2.2.1}-hept-2-ene, 5-octadecyl-bicyclo{2.2.1}-hept-2-ene, 5-ethylidene-bicyclo{2.2.1}-hept-2-ene, 5-methylidene-bicyclo{2.2.1}-hept-2-ene, 5-vinyl-bicyclo{2.2.1}-hept-2-ene, 5-propenyl-bicyclo{2.2.1}-hept-2-ene, 5-methoxy-carbonyl-bicyclo{2.2.1}-hept-2-ene, 5-cyano-bicyclo{2.2.1}-hept-2-ene, 5-methyl-5-methoxycarbonyl-bicyclo{2.2.1}-hept-2-ene, 5-ethoxycarbonyl-bicyclo{2.2.1}-hept-2-ene, bicyclo{2.2.1}-hept-5-enyl-2-methylpropionate, bicyclo{2.2.1}-hept-5-enyl-2-methyloctanate, bicyclo{2.2.1}-hept-2-ene-5,6-dicarboxylic anhydride, 5-hydroxymethylbicyclo{2.2.1}-hept-2-ene, 5,6-di(hydroxymethyl)-bicyclo{2.2.1}-hept-2-ene, 5-hydroxy-i-propylbicyclo{2.2.1}-hept-2-ene, 5,6-dicarboxy-bicyclo{2.2.1}-hept-2-ene, bicyclo{2.2.1}-hept-2-ene-5,6-dicarboxylic imide, 5-cyclopentyl-bicyclo{2.2.1}-hept-2-ene, 5-cyclohexyl-bicyclo{2.2.1}-hept-2-ene, 5-cyclohexenyl-bicyclo{2.2.1}-hept-2-ene, 5-phenyl-bicyclo{2.2.1}-hept-2-ene, tricyclo{4.3.0.1^{2,5}}deca-3,7-diene (trivial name: dicyclopentadiene), tricyclo{4.3.0.1^{2,5}}dec-3-ene, tricyclo{4.4.0.1^{2,5}}undeca-3,7-diene, tricyclo{4.4.0.1^{2,5}}undeca-3,8-diene, tricyclo{4.4.0.1^{2,5}}undec-3-ene, tetracyclo{7.4.0.1^{10,13}.0^{2,7}}-trideca-2,4,6,11-tetraene (another name: 1,4-methano-1,4,4a,9a-tetrahydrofluorene), tetracyclo{8.4.0.1^{11,14}.0^{3,8}}-tetradeca-3,5,7,12-11-tetraene (another name: 1,4-methano-1,4,4a,5,10,10a-hexahydroanthracene), tetracyclo{4.4.0.1^{2,5}.1^{7,10}} -dodec-3-ene (trivial name: tetracyclododecene), 8-methyl-tetracyclo{4.4.0.1^{2,5}.1^{7,10}}-dodec-3-ene, 8-ethyl-tetracyclo{4.4.0.1^{2,5}.1^{7,10}}-dodec-3-ene, 8-methylidene-tetracyclo{4.4.0.1^{2,5}.1^{7,10}}-dodec-3-ene, 8-ethylidene-tetracyclo{4.4.0.1^{2,5}.1^{7,10}}-dodec-3-ene, 8-vinyl-tetracyclo{4.4.0.1^{2,5}.1^{7,10}}-dodec-3-ene, 8-propenyl-tetracyclo{4.4.0.1^{2,5}.1^{7,10}}-dodec-3-ene, 8-methoxycarbonyl-tetracyclo{4.4.0.1^{2,5}.1^{7,10}}-dodec-3-ene, 8-methyl-8-methoxycarbonyl-tetracyclo{4.4.0.1^{2,5}.1^{7,10}}-dodec-3-ene, 8-hydroxymethyl-tetracyclo{4.4.0.1^{2,5}.1^{7,10}}dodec-3-ene, 8-carboxy-tetracyclo{4.4.0.1^{2,5}.1^{7,10}}-dodec-3-ene, 8-cyclopentyl-tetracyclo{4.4.0.1^{2,5}.1^{7,10}}-dodec-3-ene, 8-cyclohexyl-tetracyclo{4.4.0.1^{2,5}.1^{7,10}}-dodec-3-ene, 8-cyclohexenyl-tetracyclo{4.4.0.1^{2,5}.1^{7,10}}-dodec-3-ene, 8-phenyl-tetracyclo{4.4.0.1^{2,5}.1^{7,10}}-dodec-3-ene, pentacyclo{4.4.0.1^{2,5}.1^{7,10}}-pentadeca-3,10-diene, and pentacyclo{4.4.0.1^{2,5}.1^{7,10}}-pentadeca-4,11-diene; monocyclic cycloalkene such as cyclobutene, cyclopentene, cyclohexene, 3,4-dimethylcyclopentene, 3-methylcyclohexene, 2-(2-methylbutyl)-1-cyclohexene, cyclooctene, 3a,5,6,7a-tetrahydro-4,7-methano-1H-indene, and cycloheptene; vinyl alicyclic hydrocarbon-based monomers such as vinylcyclohexene and vinylcyclohexane; alicyclic conjugated diene-based monomers such as cyclopentadiene and cyclohexadiene; and the like. One kind of the alicyclic olefin can be used alone, or two or more kinds thereof can be used in combination.

In addition, it is possible to optionally copolymerize copolymerizable monomers. Specific examples of the monomer include ethylene having 2 to 20 carbon atoms or α-olefins such as ethylene, propylene, 1-butene, 1-pentene, 1-hexene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, and 1-eicosene; cycloolefin such as cyclobutene, cyclopentene, cyclohexene, 3,4-dimethylcyclopentene, 3-methylcyclohexene, 2-(2-methylbutyl)-1-cyclohexene, cyclooctene, and 3a,5,6,7a-tetrahydro-4,7-methano-1H-indene; non-conjugated diene such as 1,4-hexadiene, 4-methyl-1,4-hexadiene, 5-methyl-1,4-hexadiene, and 1,7-octadiene; and the like. One kind of these monomers can be used alone, or two or more kinds thereof can be used in combination.

The method of polymerizing the alicyclic olefin is not particularly limited and can be performed according to known methods. In view of thermal resistance, stability, and optical properties, it is preferable that these ring-opened polymers be used after being hydrogenated. As the hydrogenation method, known methods can be used.

### [(iii) Polystyrene derivative or hydrogenated product thereof]

The (iii) polystyrene derivative or a hydrogenated product thereof refers to a (co)polymer obtained by using a vinyl compound as a monomer or a hydrogenated product thereof, and corresponds to the cyclic olefin-based polymer having the structural unit represented by the example structure (c) among the structures described as preferable examples in the General Formula (1). Examples of the vinyl compound include a vinyl aromatic compound, a vinyl alicyclic hydrocarbon compound, and the like.

Examples of the vinyl aromatic compound include styrenes such as styrene, α-methylstyrene, α-ethylstyrene, α-propylstyrene, α-isopropylstyrene, α-t-butylstyrene, 2-methylstyrene, 3-methylstyrene, 4-methylstyrene, 2,4-diisopropylstyrene, 2,4-dimethylstyrene, 4-t-butylstyrene, 5-t-butyl-2-methylstyrene, monochlorostyrene, dichlorostyrene, monofluorostyrene, 4-phenylstyrene, and the like.

Examples of the vinyl alicyclic hydrocarbon compound include vinylcyclohexanes such as vinylcyclohexane and 3-methylisopropenyl cyclohexane; vinyl cyclohexenes such as 4-vinylcyclohexene, 4-isopropenylcyclohexene, 1-methyl-4-vinylcyclohexene, 1-methyl-4-isopropenylcyclohexene, 2-methyl-4-vinylcyclohexene, and 2-methyl-4-isopropenylcyclohexene, and the like.

In the present embodiment, the above monomer may be copolymerized with other copolymerizable monomers. Examples of the copolymerizable monomer include α-olefin-based monomers such as ethylene, propylene, isobutene, 2-methyl-1-butene, 2-methyl-1-pentene, and 4-methyl-1-pentene; cyclopentadiene-based monomers such as cyclopentadiene, 1-methylcyclopentadiene, 2-methylcyclopentadiene, 2-ethylcyclopentadiene, 5-methylcyclopentadiene, 5,5-dimethylcyclopentadiene, and dicyclopentadiene; monocyclic olefin-based monomers such as cyclobutene, cyclopentene, and cyclohexene; conjugated diene-based monomers such as butadiene, isoprene, 1,3-pentadiene, furan, thiophene, and 1,3-cyclohexadiene; nitrile-based monomers such as acrylonitrile, methacrylonitrile, and α-chloroacrylonitrile; (meth) acrylic acid ester-based monomers such as methyl methacrylate, ethyl methacrylate, propyl methacrylate, butyl methacrylate, methyl acrylate, ethyl acrylate, propyl acrylate, and butyl acrylate; unsaturated fatty acid-based monomers such as acrylic acid, methacrylic acid, and maleic anhydride; phenylmaleimide; methyl vinyl ether; heterocycle-containing vinyl compound-based monomers such as N-vinylcarbazole and N-vinyl-2-pyrrolidone; and the like.

In view of thermal resistance, a low degree of birefringence, mechanical strength, and the like, it is preferable that a mixture of the above monomers used for polymerization contain the vinyl aromatic compound and/or the vinyl alicyclic hydrocarbon compound, in an amount of 50% by mass or more in general, preferably in an amount of 70% by mass to 100% by mass, and more preferably in an amount of 80% by mass to 100% by mass. The monomer mixture may contain both the vinyl aromatic compound and vinyl alicyclic hydrocarbon compound.

The method of polymerizing the vinyl aromatic compound and vinyl alicyclic hydrocarbon compound is not particularly limited, and can be performed according to known methods. Moreover, the obtained polymer can be used after being optionally hydrogenated, and known methods can be used as the hydrogenation method.

### [(iv) Other polymers]

Examples of the (iv) other polymers include ring-opened polymers of norbornene-based monomers, addition polymers of norbornene-based monomers, addition polymers of norbornene-based monomers and vinyl compounds (ethylene, α-olefin, and the like), polymers of monocyclic cycloalkene, polymers of alicyclic conjugated diene-based monomers, polymers of vinyl alicyclic hydrocarbon-based monomers, aromatic olefin polymers, and the like. These other polymers can be arbitrarily selected within the range of General Formula (1), even if they have a structure not included in the polymers (i) to (iii). Examples thereof include copolymers obtained by copolymerizing the polymers (i) to (iii) with each other or by copolymerizing known copolymerizable monomers.

Among the 4 types of the polymers that are roughly classified into (i) to (iv), the (i) copolymer of ethylene or an α-olefin with a cycloolefin is preferable in terms of optical characteristics. Among all of the polymers, a polymer obtained by random addition polymerization of ethylene and tetracyclo[4.4.0.1^{2,5}.1^{7,10}]-3-dodecene is most preferable. If the polymer is in such a structural range of the present embodiment, a degree of optical anisotropy, which is an excellent characteristic of the polymer of the present embodiment, caused by the distortion at the time of molding becomes small, and accordingly, the optical performance does not deteriorate. That is, the polymer is plastic having a small degree of optical anisotropy, and excellent performances such as a low water absorption rate, thermal resistance, and chemical resistance are obtained.

### (Other structures usable as a portion of main chain)

The polymer used in the present embodiment may optionally have a repeating structural unit derived from other copolymerizable monomers, within a range that does not deteriorate the excellent physical properties of the product obtained by the molding method of the present embodiment. The copolymerization ratio is not limited, and preferably not higher than 20 mol% and more preferably not higher than 10 mol%. If copolymerization is performed at a copolymerization ratio equal to or higher than the above, the optical properties deteriorate, and this leads to a concern that a high-accuracy optical component may not be obtained. Moreover, the type of copolymerization is not limited, but random copolymerization is preferable.

### (Molecular weight of polymer)

The molecular weight of the polymer used for the molding material of the present embodiment is not limited and in such a degree that a limiting viscosity [η] measured in decalin at 135°C is preferably 0.03 dl/g to 10 dl/g, more preferably 0.05 dl/g to 5 dl/g, and most preferably 0.10 dl/g to 2 dl/g.

If the molecular weight is equal to or more than the above upper limit, it is possible to enhance the mechanical strength of the molded product. In addition, if the molecular weight is not more than the above upper limit, it is possible to improve moldability.

### (Phenol-based stabilizer)

Examples of the phenol-based stabilizer used in the present embodiment include stabilizers having a phenol skeleton in the structure. Generally, the stabilizer has a 3,5-dimethyl-4-hydroxyphenyl group, a 2,4-dimethyl-3-hydroxyphenyl group, a 3-methyl-2-hydroxyphenyl group, or a group including a derivative of these, for example, the following characteristic groups in the structure.

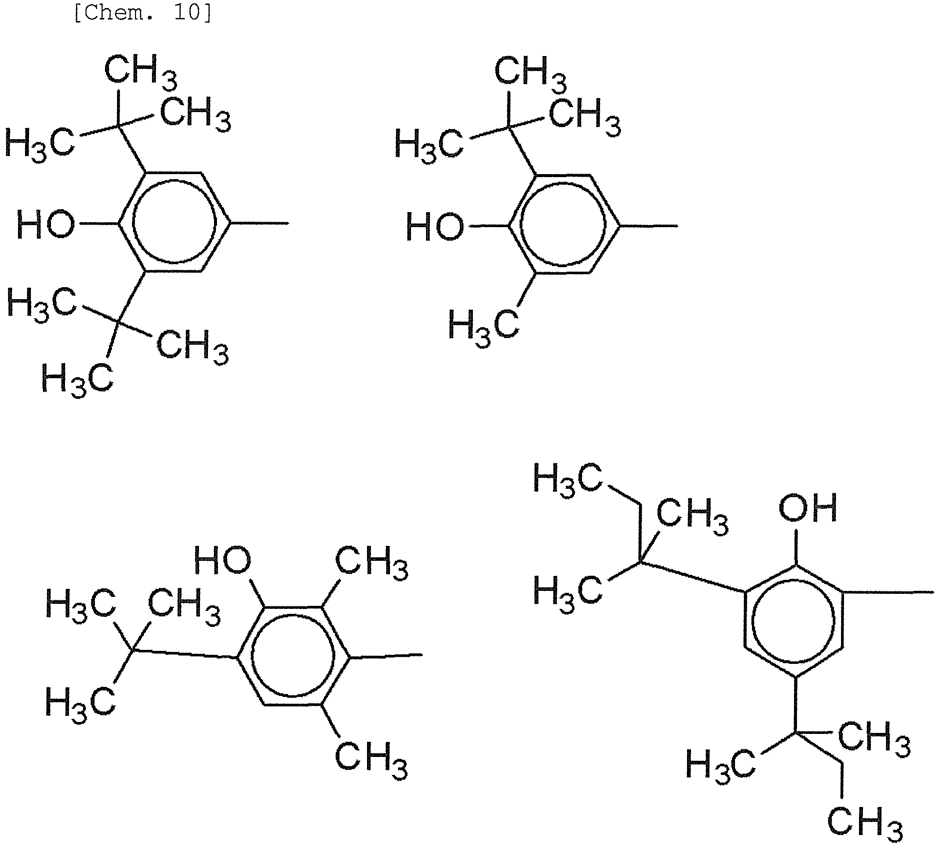

Specific examples thereof include
1,6-hexanediol-bis{3-(3,5-di-t-butyl-4-hydroxyphenyl)propionate}, pentaerythrityl-tetrakis{3-(3,5-di-t-butyl-4-hydroxyphenyl)propi onate}, octadecyl-3-(3,5-di-t-butyl-4-hydroxyphenyl)propionate, 1,3,5-trimethyl-2,4,6-tris(3,5-di-t-butyl-4-hydroxybenzyl)benzen e,
tetrakis[methylene-3-(3,5-di-t-butyl-4-hydroxyphenyl)propionate] methane, commercially available hindered phenol-based antioxidants on the market, such as Adekastab AO-20, Adekastab AO-60, Adekastab AO-80, and Adekastab AO-330 (all of the 4 kinds are manufactured by Asahi Denka Co., Ltd.) or Irganox 1010 (manufactured by Ciba-Geigy Limited), and the like. In addition, the stabilizer also include antioxidants which has a phosphoric acid ester structure and a phenol structure in a single molecule and may be generally classified into a phosphorus-based stabilizer, for example,
6-{3-(3-t-butyl-4-hydroxy-5-methylphenyl)propoxy}-2,4,8,10-tetra kis-t-butyldibenzo{d,f}{1.3.2}dioxaphosphepin.

The range of a melting point (Tm₁ (lower limit, unit: °C) to Tm₂ (upper limit, unit: °C)) of the phenol-based stabilizer can be measured by a known method. For example, a sample having a thickness of about 2 mm to 3 mm is collected into a capillary and is heated in a bath liquid. At this time, a temperature at which the sample starts to be melted is taken as Tm₁ (lower limit, unit: °C) and a temperature at which the sample is completely melted is taken as Tm₂ (upper limit, unit: °C). The range of a melting point is not limited, but the lower limit (Tm₁) of the melting point is preferably 50°C or higher and more preferably 100°C or higher. The upper limit (Tm₂) of the melting point is preferably not higher than 150°C and more preferably not higher than 140°C. Moreover, the width of the melting point (Tm₂-Tm₁) is preferably not higher than 20°C and more preferably not higher than 10°C.

If the melting point and the width of melting point are within this range, the phenol-based stabilizer attached onto the surface is prevented from being melted and detached due to handling such as drying operation performed before molding process. In addition, when being fed into a molding machine, the stabilizer is melted before the resin is melted. Accordingly, the stabilizer is evenly dispersed in the molding machine, so a uniform molded product can be obtained.

### (Higher fatty acid metal salt)

Examples of the higher fatty acid metal salt used in the present embodiment include calcium stearate, zinc stearate, magnesium stearate, barium stearate, aluminum stearate, a complex of these, and the like. Among these, calcium stearate, zinc stearate, and magnesium stearate are particularly preferable.

### (Antioxidant)

Examples of the antioxidant used in the present embodiment include a phenol-based antioxidant, a phosphorus-based antioxidant, a sulfur-based antioxidant, a thioether-based antioxidant, and the like.

As the phenol-based antioxidant used in the present embodiment, those known in the related art are used. Examples thereof include acrylate-based phenol compounds disclosed in Japanese Unexamined Patent Publication No. 63-179953 or 1-168643, such as 2-t-butyl-6-(3-t-butyl-2-hydroxy-5-methylbenzyl)-4-methylphenyl acrylate and 2,4-di-t-amyl-6-(1-(3,5-di-t-amyl-2-hydroxyphenyl)ethyl)phenyl acrylate; alkyl-substituted phenol-based compounds such as 2,6-di-t-butyl-4-methylphenol, 2,6-di-t-butyl-4-ethylphenol, octadecyl-3-(3,5-di-t-butyl-4-hydroxyphenyl)propionate, 2,2'-methylene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1 ,1-dimethylethyl)-2,4,8,10-tetraoxaspiro[5,5]-undecane, 1,1,3-tris(2-methyl-4-hydroxy-5-t-butylphenyl)butane, 1,3,5-trimethyl-2,4,6-tris(3,5-di-t-butyl-4-hydroxybenzyl)benzen e, tetrakis(methylene-3-(3',5'-di-t-butyl-4'-hydroxyphenyl)propiona te)methane [that is, pentaerythritol-methyl-tetrakis(3-(3,5-di-t-butyl-4-hydroxypheny 1)propionate)], triethylene glycol bis(3-(3-t-butyl-4-hydroxy-5-methylphenyl)propionate), and tocopherol; triazine group-containing phenol-based compounds such as 6-(4-hydroxy-3,5-di-t-butylanilino)-2,4-bisoctylthio-1,3,5-triaz ine, 6-(4-hydroxy-3,5-dimethylanilino)-2,4-bisoctylthio-1,3,5-triazin e, 6-(4-hydroxy-3-methyl-5-t-butylanilino)-2,4-bisoctylthio-1,3,5-t riazine, and 2-octylthio-4,6-bis-(3,5-di-t-butyl-4-oxyanilino)-1,3,5-triazine ; and the like. Among these, acrylate-based phenol compounds and alkyl-substituted phenol-based compounds are preferable, and alkyl-substituted phenol-based compounds are particularly preferable.

The phosphorus-based antioxidant used in the present embodiment is not particularly limited as long as it is commonly used in the general resin industry. Examples thereof include monophosphite-based compounds such as triphenyl phosphite, diphenyl isodecyl phosphite, phenyl diisodecyl phosphite, tris(nonylphenyl)phosphite, tris(dinonylphenyl)phosphite, tris(2,4-di-t-butylphenyl)phosphite, tris(2-t-butyl-4-methylphenyl)phosphite, tris(cyclohexylphenyl)phosphite, 2,2-methylenebis(4,6-di-t-butylphenyl)octylphosphite, 9,10-dihydro-9-oxa-10-phosphaphenanthrene-10-oxide, 10-(3,5-di-t-butyl-4-hydroxybenzyl)-9,10-dihydro-9-oxa-10-phosph aphenanthrene-10-oxide, and 10-decyloxy-9,10-dihydro-9-oxa-10-phosphaphenanthrene; diphosphite-based compounds such as 4,4'-butylidene-bis(3-methyl-6-t-butylphenyl-di-tridecylphosphit e), 4,4'-isopropylidene-bis(phenyl-di-alkyl(C12 to C15)phosphite), 4,4'-isopropylidene-bis(diphenylmonoalkyl(C12 to C15)phosphite), 1,1,3-tris(2-methyl-4-di-tridecylphosphite-5-t-butylphenyl)butan e, tetrakis(2,4-di-t-butylphenyl)-4,4'-biphenylene diphosphite, cyclic neopetane tetraylbis(isodecylphosphite), cyclic neopentane tetraylbis(nonylphenylphosphite), cyclic neopentane tetraylbis(2,4-di-t-butylphenylphosphite), cyclic neopentane tetraylbis(2,4-dimethylphenylphosphite), and cyclic neopentane tetraylbis(2,6-di-t-butylphenylphosphite); and the like. Among these, monophosphite-based compounds are preferable, and tris(nonylphenyl)phosphite, tris(dinonylphenyl)phosphite, tris(2,4-di-t-butylphenyl)phosphite, and the like are particularly preferable.

Examples of the sulfur-based antioxidant used in the present embodiment include dilauryl 3,3-thidipropionate, dimyristyl 3,3'-thiodipropionate, distearyl 3,3-thiodipropionate, laurylstearyl 3,3-thidipropionate, pentaerythritol-tetrakis(β-lauryl-thio-propionate), 3,9-bis(2-dodecylthioethyl)-2,4,8,10-tetraoxaspiro[5,5]undecane, and the like.

Examples of the thioether-based antioxidant used in the present embodiment include tetrakis{methylene-3-(laurylthio)propionate}methane, bis{methyl-4-{3-n-alkyl(C12 or C14)thiopropionyl}-5-t-butylphenyl}sulfide, ditridecyl-3,3'-thiodipropionate, and the like.

### (Ultraviolet absorber)

As the ultraviolet absorber used in the present embodiment, those generally used in the resin industry can be used without particular limitation. Examples thereof include ultraviolet absorbers based on benzophenone, salycilic acid, benzotriazole, acrylate, a metal complex salt, and the like.

Examples of the benzophenone-based ultraviolet absorber used in the present embodiment include 2,4-dihydroxybenzophenone, 2-hydroxy-4-methoxybenzophenone, 2-hydroxy-4-methoxybenzophenone-5-sulfonic acid trihydrate, 2-hydroxy-4-octyloxybenzophenone, 4-dodecyloxy-2-hydroxybenzophenone, 4-benzyloxy-2-hydroxybenzophenone, 2,2',4,4'-tetrahydroxybenzophenone, 2,2'-dihydroxy-4,4'-dimethoxybenzophenone, and the like.

Examples of the salicylic acid-based ultraviolet absorber used in the present embodiment include phenyl salicylate, 4-t-butylphenyl-2-hydroxybenzoate, phenyl-2-hydroxybenzoate, 2,4-di-t-butylphenyl-3,5-di-t-butyl-4-hydroxybenzoate, hexadecyl-3,5-di-t-butyl-4-hydroxybenzoate, and the like.

Examples of the benzotriazole-based ultraviolet absorber used in the present embodiment include 2-(2-hydroxy-5-methylphenyl)2H-benzotriazole, 2-(3-t-butyl-2-hydroxy-5-methylphenyl)-5-chloro-2H-benzotriazole, 2-(3,5-di-t-butyl-2-hydroxyphenyl)-5-chloro-2H-benzotriazole, 2-(3,5-di-t-butyl-2-hydroxyphenyl)-2H-benzotriazole, 5-chloro-2-(3,5-di-t-butyl-2-hydroxyphenyl)-2H-benzotriazole, 2-(3,5-di-t-amyl-2-hydroxyphenyl)-2H-benzotriazole, 2-(2-hydroxy-5-t-octylphenyl)-2H-benzotriazole, 2-(2-hydroxy-4-octylphenyl)-2H-benzotriazole, 2-(2H-benzotriazol-2-yl)-4-methyl-6-(3,4,5,6-tetrahydrophthalimi dylmethyl)phenol, 2,2'-methylenebis[4-(1,1,3,3-tetramethylbutyl)-6-[(2H-benzotriaz ol-2-yl)phenol], and the like.

Examples of the acrylate-based ultraviolet absorber used in the present embodiment include ethyl-2-cyano-3,3-diphenyl acrylate, 2'-ethylhexyl-2-cyano-3,3-diphenyl acrylate, and the like.

As the metal complex salt-based ultraviolet absorber used in the present embodiment, complex salts of nickel or cobalt are generally used. Specific examples thereof include nickel[2,2'thiobis(4-t-octyl)phenolate]n-butylamine, nickel dibutyl dithiocarbamate, nickel bis[o-ethyl-3,5-(di-t-butyl-4-hydroxybenzyl)]phosphate, cobalt dicyclohexyl dithiophosphate, [1-phenyl,3-methyl,4-decanonyl,pyrazolate(5)2]nickel, and the like.

### (Hindered amine-based light stabilizer)

The hindered amine-based light stabilizer used in the present embodiment are compounds having a 3,5-di-t-butyl-4-hydroxyphenyl group and a 2,2,6,6-tetramethylpiperidyl group or a 1,2,2,6,6-pentamethyl-4-piperidyl group in the structure in general. Specific examples thereof include 2,2,6,6-tetramethyl-4-piperidyl stearate, 1,2,2,6,6-pentamethyl-4-piperidyl stearate, 2,2,6,6-tetramethyl-4-piperidyl benzoate, N-(2,2,6,6-tetramethyl-4-piperidyl)dodecyl succinate imide, 1-{(3,5-di-t-butyl-4-hydroxyphenyl)propionyloxyethyl}-2,2,6,6-te tramethyl-4-piperidyl-(3,5-di-t-butyl-4-hydroxyphenyl)propionate, bis(1,2,2,6,6-pentamethyl-4-piperidyl)sebacate, bis(1,2,2,6,6-pentamethyl-4-piperidyl)-2-butyl-2-(3,5-di-t-butyl -4-hydroxybenzyl)malonate, N,N'-bis(2,2,6,6-tetramethyl-4-piperidyl)hexamethylenediamine, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-buta ne tetracarboxylate, 3,9-bis{1,1-dimethyl-2-{tris(2,2,6,6-tetramethyl-4-piperidyloxyc arbonyloxy)butylcarbonyloxy}ethyl}-2,4,8,10-tetraoxaspiro{5.5}un decane, 3,9-bis{1,1-dimethyl-2-{tris(1,2,2,6,6-pentamethyl-4-piperidylox ycarbonyloxy)butylcarbonyloxy}ethyl}-2,4,8,10-tetraoxaspiro{5.5} undecane, 1,5,8,12-tetrakis{4,6-bis{N-(2,2,6,6-tetramethyl-4-piperidyl)but ylamino}-1,3,5-triazin-2-yl}-1,5,8,12-tetraazadodecane, a 1-(2-hydroxyethyl)-2,2,6,6-tetramethyl-4-piperidinol/dimethyl succinate condensate, a 2-t-octylamino-4,6-dichloro-s-triazine/N,N'-bis(2,2,6,6-tetramet hyl-4-piperidyl)hexamethylene diamine condensate, a N,N'-bis(2,2,6,6-tetramethyl-4-piperidyl)hexamethylene diamine/dibromoethane condensate, 2,2,6,6-tetramethyl-4-hydroxypiperidin-N-oxyl, bis(2,2,6,6-tetramethyl-N-oxylpiperidine)sebacate, tetrakis(2,2,6,6-tetramethyl-N-oxypiperidyl)butane-1,2,3,4-tetra carboxylate, 3,9-bis(1,1-dimethyl-2-(tris(2,2,6,6-tetramethyl-N-oxylpiperidyl -4-oxycarbonyl)butylcarbonyloxy)ethyl)2,4,6,10-tetraoxaspiro{5.5 }undecane, a 1,6-bis(2,2,6,6-tetramethyl-4-piperidylamino)hexane/dibromoethan e polycondensate, a 1,6-bis(2,2,6,6-tetramethyl-4-piperidylamino)hexane/2,4-dichloro -6-t-octylamino-s-triazine polycondensate, a 1,6-bis(2,2,6,6-tetramethyl-4-piperidylamino)hexane/2,4-dichloro -6-morpholino-s-triazine polycondensate, a condensate of 2,2,6,6-tetramethyl-4-piperidinol, tridecyl alcohol, and 1,2,3,4-butane tetracarboxylate, a condensate of 2,2,6,6-tetramethyl-4-piperidinol and 1,2,3,4-butane tetracarboxylate, a condensate of 1,2,2,6,6-pentamethyl-4-piperidinol, tridecyl alcohol, and 1,2,3,4-butane tetracarboxylate, a condensate of 1,2,2,6,6-pentamethyl-4-piperidinol and 1,2,3,4-butane tetracarboxylate, 1-[2-{3-(3,5-di-t-butyl-4-hydroxyphenyl)propionyloxy}ethyl]-4-{3 -3,5-di-t-butyl-4-hydroxyphenyl}propionyloxy-2,2,6,6-tetramethyl piperidine (for example, Sanol LS-2626 manufactured by Sankyosha, Co., Ltd.), 2-(3,5-di-t-butyl-4-hydroxybenzyl)-2-n-butyl malonate-bis-(1,2,2,6,6-pentamethyl-4-piperidyl) (for example, Tinuvin144 manufactured by Ciba-Geigy Japan, Limited), bis(2,2',6,6'-tetramethyl-4-piperidyl)sebacate (for example, TINUVIN770 manufactured by Ciba-Geigy Japan, Limited), poly[6-(1,1,3,3-tetramethylbutyl)imino-1,3,5-triazine-2,4-diyl][ (2,2,6,6-tetramethyl-4-piperidyl)imino]hexamethylene[(2,2,6,6-te tramethyl-4-piperidyl)imino] (for example, CHIMASSORB944 manufactured by Ciba-Geigy Japan, Limited), and the like.

### (Hydrochloric acid absorber)

The hydrochloric acid absorber used in the present embodiment includes a higher fatty acid metal salt. Specific examples thereof include sodium stearate, magnesium stearate, calcium stearate, zinc stearate, lithium stearate, barium stearate, aluminum stearate, sodium 12-hydroxystearate, calcium 12-hydroxystearate, magnesium 12-hydroxystearate, zinc 12-hydroxystearate, and the like. The examples also include epoxy-based compounds such as epoxylated octyl stearate and epoxylated soy bean oil; inorganic compounds such as magnesium hydroxide, calcium hydroxide, and hydrotalcite; and the like.

### (Metal deactivator)

Examples of the metal deactivator used in the present embodiment include N,N'-diphenyloxamide, N-salicylal-N'-salicyloylhydrazine, N,N'-bis(salicyloyl)hydrazine, N,N'-bis(3,5-di-t-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenyl hydrazide, N,N'-bis(salicyloyl)oxalyl dihydrazide, N,N'-bis(salicyloyl)thiopropionyl dihydrazide, and the like.

### (Antistatic agent and anti-fog agent)

Examples of the antistatic agent and anti-fog agent used in the present embodiment include cationic surfactants, anionic surfactants, amphoteric surfactants, nonionic surfactants, and the like.

The cationic surfactant used in the present embodiment is not particularly limited, and examples thereof include tetraalkyl ammonium salts such as lauryl trimethyl ammonium chloride and stearyl trimethyl ammonium chloride, and the like.

Examples of the anionic surfactant include alkyl sulfonate such as sodium decanesulfonate, sodium undecane sulfonate, sodium dodecane sulfonate, sodium tridecane sulfonate, sodium tetradecane sulfonate, sodium pentadecane sulfonate, sodium hexadecane sulfonate, sodium heptadecane sulfonate, sodium octadecane sulfonate, sodium nonadecane sulfonate, sodium eicosane sulfonate, potssium decane sulfonate, potassium undecane sulfonate, potassium dodecane sulfonate, potassium tridecane sulfonate, potassium tetradecane sulfonate, potassium pentadecane sulfonate, potassium hexadecane sulfonate, potassium heptadecane sulfonate, potassium octadecane sulfonate, potassium nonadecane sulfonate, and potassium eicosane decane sulfonate; alkylbenzene sulfonate such as sodium decylbenzene sulfonate, sodium undecylbenzene sulfonate, sodium dodecylbenzene sulfonate, sodium tridecylbenzene sulfonate, sodium tetradecylbenzene sulfonate, sodium pentadecylbenzene sulfonate, sodium hexadecylbenzene sulfonate, sodium heptadecylbenzene sulfonate, and sodium octadecylbenzene sulfonate; alkyl phosphate; and the like.

The amphoteric surfactant used in the present embodiment is not particularly limited, and examples thereof include betaine compounds such as lauryl betaine, stearyl betaine, lauryl amidopropyl betaine, and stearyl amidopropyl betaine; lauryl dimethyl amine oxide; dimethyl amine oxide compounds such as a stearyl dimethyl amine oxide and the like; alanine compounds such as N-stearyl-α-alaninate and N-lauryl-α-alaninate; and the like.

The nonionic surfactant used in the present embodiment is not particularly limited, and examples thereof include lauric acid monoglyceride, palmitic acid monoglyceride, stearaic acid monoglyceride, oleic acid monoglyceride, behenic acid monoglyceride, caprylic acid monoglyceride, palm fatty acid monoglyceride, lauric acid diglyceride, palmitic acid diglyceride, stearic acid diglyceride, oleic acid diglyceride, behenic acid diglyceride, caprylic acid diglyceride, palm fatty acid diglyceride, fatty acid esters of pentaerythritol such as lauric acid triglyceride, palmitic acid triglyceride, stearic acid triglyceride, oleic acid triglyceride, behenic acid triglyceride, caprylic acid triglyceride, palm fatty acid triglyceride, pentaerythritol monolaurate, pentaerythritol monostearate, pentaerythritol dilaurate, pentaerythritol distearate, pentaerythritol tristearate, pentaerythritol tetrastearate, and pentaerythritol tetralaurate; fatty acid ester of solbitol such as sorbitol monolaurate, sorbitol monostearate; fatty acid esters of polyols like polyethylene glycol fatty acid esters such as polyethylene glycol monolaurate, polyethylene glycol monostearate, polyethylene glycol monooleate, and polyethylene glycol distearate; diethanolamides such as lauric acid diethanolamide, stearic acid diethanolamide, and palm fatty acid diethanolamide; and the like.

### (Lubricant and slip agent)

Examples of the lubricant and slip agent used in the present embodiment include higher fatty acids such as waxes, oil, caprins, lauric acid, myristic acid, palmitic acid, margarine acid, stearic acid, arachidic acid, and behenic acid or metal salts of these, that is, a lithium salt, a calcium salt, a sodium salt, a magnesium salt, a potassium salt, and the like, aliphatic alcohols such as palmityl alcohol, cetyl alcohol, and stearyl alcohol, aliphatic amides such as caproic acid amide, caprylic acid amide, capric acid amide, lauric acid amide, myristic acid amide, palmitic acid amide, and stearic acid amide, esters of fatty acid and alcohol, fluoroalkyl carboxylate or a metal salt thereof, fluorine compounds such as a fluoroalkyl sulfonate metal salt, and the like.

Examples of the waxes used in the present embodiment include mineral wax such as montan wax, peat wax, ozokerite·ceresin wax, and petroleum wax, polyolefin wax such as polyethylene wax and polypropylene wax, synthetic wax such as Fischer-Tropsch wax, chemically modified hydrocarbon wax, and substituted amide wax, plant wax, animal wax, and the like.

Examples of the oil used in the present embodiment include natural and synthetic oil, such as aromatic oil, naphthenic oil, mineral oil such as paraffin-based oil, plant oil, and silicon oil, and the like. As the silicon oil, dimethylpolysiloxane having a viscosity of 10 cSt to 5000 cSt and preferably 500 cSt can be used.

### (Nucleating agent)

Examples of the nucleating agent used in the present embodiment include sodium-2,2'-methylenebis(4,6-di-t-butylphenyl)phosphate, [phosphoric acid-2,2'-methylenebis(4,6-di-t-butylphenyl)]hydroxyaluminum, bis[phosphoric acid-2,2'-methylenebis(4,6-di-t-butylphenyl)]dihydroxyaluminum, tris[phosphoric acid-2,2'-methylenebis(4,6-di-t-butylphenyl)]aluminum, sodium-bis (4-t-butylphenyl) phosphate, benzoic acid metal salts such as sodium benzoate, aluminum p-t-butylbenzoate, 1,3:2,4-bis(O-benzylidene)sorbitol, 1,3:2,4-bis(O-methylbenzylidene)sorbitol, 1,3:2,4-bis(O-ethylbenzylidene)sorbitol, 1,3-O-3,4-dimethylbenzylidene-2,4-O-benzylidene sorbitol, 1,3-O-benzylidene-2,4-O-3,4-dimethylbenzylidene sorbitol, 1,3:2,4-bis(O-3,4-dimethylbenzylidene)sorbitol, 1,3-O-p-chlorobenzylidene-2,4-O-3,4-dimethylbenzylidene sorbitol, 1,3-O-3,4-dimethylbenzylidene-2,4-O-p-chlorobenzylidene sorbitol, 1,3:2,4-bis(0-p-chlorobenzylidene)sorbitol, a mixture of these, and the like.

### (Plasticizer)

Examples of the plasticizer used in the present embodiment include phosphoric acid triester-based plasticizers such as tricresyl phosphate, trixylyl phosphate, triphenyl phosphate, triethyl phenyl phosphate, diphenyl cresyl phosphate, monophenyl dicresyl phosphate, dicresyl monoxylenyl phosphate, aryl alkyl phosphate, diphenyl monoxylenyl phosphate, morphosphate, trioctyl phosphate, and tris(isopropylphenyl)phosphate; phthalic acid ester-based plasticizers such as dimethyl phthalate, diethyl phthalate, dibutyl phthalate, diheptyl phthalate, di-n-octyl phthalate, di-2-ethylhexyl phthalate, diisononyl phthalate, octyldecyl phthalate, and butylbenzyl phthalate; fatty acid-basic acid ester-based plasticizers such as butyl oleate, glycerin monooleic acid ester; adipic acid di-n-fatty acid dibasic acid ester-based plasticizers such as dibutyl adipate and the like; divalent alcohol ester-based plasticizers; oxy acid ester-based plasticizers; and the like.

### (Flame retardant)

As the flame retardant used in the present embodiment, halogen-based flame retardants and phosphorus-based flame retardants can be used.

As the halogen-based flame retardant used in the present embodiment, it is possible to use various types of flame retardants based on chlorine and bromine. However, in view of the flame-retarding effect, thermal resistance at the time of molding process, dispersibility in a resin, influence on the physical properties of the resin, and the like, it is preferable to use hexabromobenzene, pentabromoethylbenzene, hexabromobiphenyl, decabromodiphenyl, hexabromodiphenyloxide, octabromodiphenyloxide, decabromodiphenyloxide, pentabromocyclohexane, tetrabromobisphenol A, derivatives of these [for example, tetrabromobisphenol A-bis(hydroxyethylether), tetrabromobisphenol A-bis(2,3-dibromopropylether), tetrabromobisphenol A-bis(bromoethylether), and tetrabromobisphenol A-bis (allylether)], tetrabromobisphenol S and derivatives thereof [for example, tetrabromobisphenol S-bis(hydroxyethylether) and tetrabromobisphenol S-bis(2,3-dibromopropylether)], tetrabromophthalic anhydride and derivatives thereof [for example, tetrabromophthalimide and ethylene bistetrabromophthalimide], ethylene bis(5,6-dibromonorbornene-2,3-dicarboxyimide), tris-(2,3-dibromopropyl-1)-isocyanurate, adducts obtained from the Diels-Alder reaction of hexachlorocyclopentadiene, tribromophenyl glycidyl ether, tribromophenyl acrylate, ethylene bistribromophenyl ether, ethylene bispentabromophenyl ether, tetradecabromodiphenoxybenzene, brominated polystyrene, brominated polyphenylene oxide, brominated epoxy resins, brominated polycarbonate, polypentabromobenzyl acrylate, octabromonaphthalene, hexabromocyclododecane, bis(tribromophenyl)fumalamide, N-methylhexabromodiphenylamine, and the like.

Examples of the phosphorus-based flame retardant used in the present embodiment include halogen-containing phosphoric acid ester flame retardants such as tris(chloroethyl)phosphate, tris(2,3-dichloropropyl)phosphate, tris(2-chloropropyl)phosphate, tris(2,3-bromopropyl)phosphate, tris(bromochloropropyl)phosphate, 2,3-dibromopropyl-2,3-chloropropyl phosphate, tris(tribromophenyl)phosphate, tris(dibromophenyl)phosphate, and tris(tribromoneopentyl)phosphate; aliphatic phosphoric acid esters such as trimethyl phosphate, triethyl phosphate, tributyl phosphate, trioctyl phosphate, and tributoxyethyl phosphate; non-halogen phosphoric acid ester flame retardants like aromatic phosphoric acid esters such as triphenyl phosphate, cresyl diphenyl phosphate, dicresyl phenyl phosphate, tricresyl phosphate, trixylenyl phosphate, xylenyl diphenyl phosphate, tri(isopropylphenyl)phosphate, isopropylphenyl diphenyl phosphate, diisopropylphenyl phenyl phosphate, tri(trimethylphenyl)phosphate, tri(t-butylphenyl)phosphate, hydroxyphenyl diphenyl phosphate, and octyl diphenyl phosphate; and the like.

### (Phosphorus-based stabilizer)

Examples of the phosphorus-based stabilizer used in the present embodiment include tris(2,4-di-t-butylphenyl)phosphite, tetrakis(2,4-di-t-butylphenyl)-4,4'-biphenylene diphosphonate, bis(2,6-di-t-butyl-4-methylphenyl)pentaerythritol-di-phosphite, bis(2,4-di-t-butyl)pentaerythritol-di-phosphite, 2,2'-methylenebis(4,6-di-t-butylphenyl)octyl phosphite, 2,2'-ethylidenebis(4,6-di-t-butylphenyl)fluorophosphonate, tris(monononylphenyl)phosphzte, tris[2-[[2,4,8,10-tetra-t-butylbenzo[d,f][1,3,2]dioxaphosphepin-6-yl] oxy] ethyl] amine, and the like. Moreover, examples of the stabilizer having a phosphoric acid ester structure and a phenol structure in a single molecule include 6-{3-(3-t-butyl-4-hydroxy-5-methylphenyl)propoxy}-2,4,8,10-tetra kis-t-butyldibenzo{d,f}{1.3.2}dioxaphosphepin and the like.

In order to prevent these stabilizers used in the present embodiment from foaming during the molding process or volatilizing from the surface of the molded product at a high temperature, it is preferable that a vapor pressure at 20°C of the stabilizers be not higher than 10⁻⁶ Pa.

The vapor pressure of all of the phenol-based stabilizer and phosphorus-based stabilizer described above as specific examples is preferably not higher than 10⁻⁶ Pa.

In order to prevent the phenol-based stabilizer, higher fatty acid metal salt, antioxidant, ultraviolet absorber, hindered amine-based light stabilizer, hydrochloric acid absorber, metal deactivator, antistatic agent, anti-fog agent, lubricant, slip agent, nucleating agent, plasticizer, flame retardant, and phosphorus-based stabilizer from foaming during the molding process and volatilizing from the surface of the molded product at a high temperature, it is preferable that a vapor pressure at 20°C of these be not higher than 10⁻⁶ Pa. The vapor pressure of all of the phenol-based stabilizer and phosphorus-based stabilizer described above as specific examples is preferably not higher than 10⁻⁶ Pa.

### (Resin composition)

The resin composition used for producing the molding material of the present embodiment is desirably obtained by blending the hindered amine-based light stabilizer preferably in an amount of 0.25 parts by mass to 10 parts by mass, more preferably in an amount of 0.3 parts by mass to 5 parts by mass, and even more preferably in an amount of 0.5 parts by mass to 3 parts by mass, the phenol-based stabilizer preferably in an amount of 0.01 parts by mass to 50 parts by mass and more preferably in an amount of 0.04 parts by mass to 20 parts by mass, the higher fatty acid metal salt preferably in an amount of 0.01 parts by mass to 50 parts by mass and more preferably in an amount of 0.04 parts by mass to 20 parts by mass, and the phosphorus-based stabilizer preferably in an amount of 0.01 parts by mass to 5 parts by mass, more preferably in an amount of 0.02 parts by mass to 2 parts by mass, and even more preferably in an amount of 0.05 parts by mass to 1 part by mass, based on 100 parts by mass of the polymer.

If the amount of the hindered amine-based light stabilizer is too small, light resistance, weather resistance, thermal resistance, and the like become insufficient, and if the amount is too large, bleeding occurs, so appearance defect is caused in some cases. If the amount of the phenol-based stabilizer is too small, weather resistance, thermal resistance, and the like become insufficient, and if the amount is too large, coloring occurs in some cases. If the amount of the higher fatty acid metal salt is too large, coloring or clouding occurs in some cases. If the amount of the phosphorus-based stabilizer is too small, white turbidity is caused in the composition, so transparency thereof becomes insufficient. If the amount is too large, a problem that the appearance of the molded product deteriorates due to bleeding arises in some cases. That is, when the blending amount of these stabilizers is within the respective numerical range, the above characteristics are balanced well.

The method of blending the polymer with the phenol-based stabilizer, higher fatty acid metal salt, hindered amine-based light stabilizer, phosphorus-based stabilizer, and optionally the following additives is not particularly limited. These may be kneaded with the polymer. Alternatively, these may be blended with the polymer solution, and the solvent may be removed, or these may be precipitated in a poor solvent.

### (Other additives)

In addition to the above, various additives may be optionally added to the molding material of the present embodiment, within a range that does not diminish the effects of the present invention. For example, various additives such as an ultraviolet inhibitor; an antistatic agent based on amine and the like; and a lubricant such as ester of aliphatic alcohol and partial ester and partial ether of polyol may be added. In addition, according to the usage purpose, a resin such as an ethylenic polymer or a rubbery polymer may be added, within a range in which the characteristics of the hydrogenated product of the present embodiment are not lost.

In the present embodiment, it is preferable to concurrently use the ultraviolet absorber. Particularly, it is preferable to use a benzotriazole-based ultraviolet absorber and/or a benzophenone-based ultraviolet absorber.

Specific examples of the benzotriazole-based ultraviolet absorber include 2-(5-methyl-2-hydroxyphenyl)benzotriazole, 2-(2-hydroxy-3,5-bis(α,α-dimethylbenzyl)phenyl)2H-benzotriazole, 2-(2'-hydroxy-5'-methyl-phenyl)benzotriazole, 2-(2'-hydroxy-3',5'-di-t-butyl-phenyl)benzotriazole, 2-(2'-hydroxy-3'-t-butyl-5'-methyl-phenyl)-5-chloro·benzotriazol e, 2-(2'-hydroxy-3',5'-di-t-butyl-phenyl)-5-chloro·benzotriazole, 2-(2'-hydroxy-4'-n-octoxy·phenyl)benzotriazole, benzotriazole derivatives such as commercially available Tinuvin 328 and TinuvinPS (all manufactured by Ciba-Geigy Japan, Limited), SEESORB709 (2-(2'-hydroxy-5'-t-octylphenyl)benzotriazole manufactured by SHIRAISHI CALCIUM KAISHA, LTD.), and the like.

Specific examples of the benzophenone-based ultraviolet absorber include 2,4-dihydroxy-benzophenone, 2-hydroxy-4-methoxy.benzophenone, 2,2'-dihydroxy-4-methoxy·benzophenone, 2,2'-dihydroxy-4,4'-dimethoxy·benzophenone, 2,2'-dihydroxy-4,4'-dimethoxy-5-sulfobenzophenone, 2-hydroxy-4-methoxy-2'-carboxy·benzophenone, 2-hydroxy-4-methoxy-5-sulfobenzophenone-trihydrate, 2-hydroxy-4-n-octoxy.benzophenone, 2-hydroxy-4-octadecyloxy.benzophenone, 2-hydroxy-4-n-dodecyloxy.benzophenone, 2-hydroxy-4-benzyloxybenzophenone, 2,2',4,4'-tetrahydroxy·benzophenone, 2-hydroxy-4-dodecyloxy-benzophenone, 2-hydroxy-4-(2-hydroxy-3-methacryloxy)propoxybenzophenone, Uvinu1490 (a mixture of 2,2'-dihydroxy-4,4'-dimethoxy·benzophenone and other tetra-substituted benzophenone, manufactured by GAF Corporation), PermylB-100 (benzophenone compound manufactured by Ferro Corporation), and the like.

Based on 100 parts by mass of the polymer of the present embodiment, the ultraviolet absorber is blended preferably in an amount of 0.005 parts by mass or more, more preferably in an amount of 0.01 parts or more, and particularly preferably in an amount of 0.02 parts by mass or more, and preferably in an amount not more than 1 part by mass, more preferably in an amount not more than 0.7 parts by mass, and particularly preferably in an amount not more than 0.5 parts by mass. If the amount of the ultraviolet absorber is too small, light resistance, weather resistance, and the like become insufficient in some cases, and if the amount is too large, the molded product is colored in some cases. That is, if the amount is within the above range, light resistance and weather resistance become excellent, and coloring of the molded product is inhibited.

Examples of the lubricant include known compounds disclosed in Japanese Unexamined Patent Publication No. 63-273666 that has a structure formed by partial esterification of polyol, such as glycerin monostearate, glycerin monolaurate, glycerin distearate, pentaerythritol monostearate, pentaerythritol distearate, and pentaerythritol tristearate; known compounds disclosed in Japanese Unexamined Patent Publication No. 3-39403 that are obtained by partial esterification of polyol, such as 3-(4-nonylphenyloxy)-1,2-propanediol, 3-(behenyloxy)-1,2-propanediol, and 2,2-bis{4-(2,3-dihydroxypropyloxy)phenyl}propane; compounds having a structure formed when all OH groups of alcohols form an ester bond with OH group-containing saturated fatty acid, such as 12-hydroxystearate triglyceride, 12-hydroxystearate stearyl alcohol, pentaerythritol-tetra-12-hydroxystearate, ethylene glycol-di-12-hydroxystearate, and propylene glycol-di-12-hydroxystearate; compounds having a structure formed when a portion of OH groups of alcohols forms an ester bond with OH group-containing saturated fatty acid, such as 12-hydroxystearate monoglyceride; and the like.

### (Molding material)

The molding material of the present embodiment is used for an optical component selected from an fθ lens, an imaging lens, and a light guide plate, and contains a polymer having an alicyclic structure in a portion or all of repeating structural units and additives. At this time, at least a portion of the additives is present on the surface of the particles containing the polymer.

Herein, the additives present on the surface of the particles are preferably at least one or more kinds selected from a group consisting of the phenol-based stabilizer, higher fatty acid metal salt, antioxidant, ultraviolet absorber, hindered amine-based light stabilizer, hydrochloric acid absorber, metal deactivator, antistatic agent, anti-fog agent, lubricant, slip-agent, nucleating agent, plasticizer, flame retardant, and phosphorus-based stabilizer, more preferably at least one or more kinds selected from the phenol-based stabilizer and higher fatty acid metal salt, and particularly preferably the phenol-based stabilizer.

Moreover, the particles containing the polymer are generally shaped like pellets.

If the molding material of the present embodiment is used, it is possible to obtain an optical component which has sufficient optical performances and a surface in which the formation of a dent is inhibited, exhibits excellent appearance quality, and is selected from an fθ lens, an imaging lens, and a light guide plate. Furthermore, in the molding material of the present embodiment, the stabilizer attached onto the particle surface acts as a lubricant, so moldability is stabilized. Accordingly, the molding material is suitable for mass production of optical components.

In addition, in the molding material of the present embodiment, provided that the amount of the polymer contained in the molding material is 100 parts by mass, it is preferable that the additives be present on the surface of the particles, in an amount ranging from 0.01 parts by mass to 50 parts by mass and preferably in an amount ranging from 0.04 parts by mass to 20 parts by mass.

Moreover, in the molding material of the present embodiment, provided that the total amount of the molding material is 100 parts by mass, it is preferable that the additives be present on the surface of the particles, in an amount ranging from 0.01 parts by mass to 50 parts by mass.

It is desirable that the molding material of the present embodiment contain the hindered amine-based light stabilizer preferably in an amount of 0.25 parts by mass to 10 parts by mass, more preferably in an amount of 0.3 parts by mass to 5 parts by mass, and even more preferably in an amount of 0. 5 parts by mass to 3 parts by mass, the phenol-based stabilizer preferably in an amount of 0.01 parts by mass to 50 parts by mass and more preferably in an amount of 0.04 parts by mass to 20 parts by mass, the higher fatty acid metal salt preferably in an amount of 0.01 parts by mass to 50 parts by mass and more preferably in an amount of 0.04 parts by mass to 20 parts by mass, and the phosphorus-based stabilizer preferably in an amount of 0.01 parts by mass to 5 parts by mass, more preferably in an amount of 0.02 parts by mass to 2 parts by mass, and even more preferably in an amount of 0. 05 parts by mass to 1 part by mass, based on 100 parts by mass of the polymer. When the hindered amine-based light stabilizer and the phenol-based stabilizer coexist, these react with each other and form a salt in some cases. The above numerical range also includes the respective stabilizers used for the formation of salt.

If the amount of the hindered amine-based light stabilizer is too small, light resistance, weather resistance, thermal resistance, and the like become insufficient, and if the amount is too large, bleeding occurs, and this causes appearance defect. If the amount of the phenol-based stabilizer is too small, weather resistance, thermal resistance, and the like become insufficient, and if the amount is too large, coloring occurs. If the amount of the higher fatty acid metal salt is too large, coloring or clouding occurs. If the amount of the phosphorus-based stabilizer is too small, white turbidity is caused in the composition, so transparency thereof becomes insufficient. If the amount is too large, a problem that the appearance of the molded product deteriorates due to bleeding arises. That is, when the blending amount of these stabilizers is within the respective numerical range, the above characteristics are balanced well.

A melt viscosity at 130°C of the additives present on the surface of the particles is preferably equal to or higher than 100 mPa·s and equal to or lower than 10000 mPa·s and more preferably equal to or higher than 150 mPa·s and equal to or lower than 1000 mPa·s. Herein, the melt viscosity is a value measured under the condition of a shear speed of 100 sec⁻¹ at 130°C in a nitrogen atmosphere under a friction mode.

An average particle size d₅₀ of the additives is preferably equal to or less than 1000 µm, more preferably equal to or less than 500 µm, and particularly preferably equal to or less than 300 µm. Herein, the method of measuring the average particle size d₅₀ varies with the type of the additives. For example, when the additive is the phenol-based stabilizer, it can be measured using a dry dispersion unit of a laser diffraction type particle size distribution analyzer. When the additive is polyethylene wax, the average particle size d₅₀ can be measured by a mesh method. In the mesh method, sieves having meshes of different pore sizes are staked on each other in plural layers, the weight of the particles on each mesh is weighed to measure the particle size distribution, and the mean value can be taken as the average particle size.

In the molding material of the present embodiment, a value which is obtained by subtracting the temperature of the phase transition point of the additives present on the surface of the particles from the temperature of the phase transition point of the polymer is preferably equal to or higher than -100°C and equal to or lower than 140°C, more preferably equal to or higher than 0°C and equal to or lower than 50°C, and particularly preferably equal to or higher than 10°C and equal to or lower than 30°C. Herein, the temperature of the phase transition point varies with the type of substances, and represents a softening temperature, a melting point, or a glass transition temperature.

### (Method of producing molding material)

The method of producing the molding material of the present embodiment includes a step of attaching the additives onto the surface of the particles, or a step of attaching the additives onto the surface of the particles and then fusing the additives to the particles.

The particles containing the polymer having an alicyclic structure in a portion or all of repeating structural units are obtained as, for example, pellet-shaped particles, by mixing the above resin composition containing the additives by using the Henschel mixer or the like and then making particles by using an extruder or the like.

The method of attaching the additives onto the surface of the pellet-shaped particles (hereinafter, simply described as pellets in some cases) is not particularly limited. Any method can be used as long as the additives are held on the particle surface by an anchor effect, surface tension, an elastostatic force, and the like.

In addition, it is preferable to fuse the additives onto the particle surface. When the additives are in a solid state at room temperature, in order to fuse the additives onto the particle surface, the pellets to which the additives have been attached are heated. Specifically, the particles with surface to which the additives have been attached are heated at a temperature equal to or higher than (Tm₁ - 20) °C and equal to or lower than (Tm₂ + 20) °C. In this manner, it is possible to prevent the additives attached onto the particle surface from being detached. Herein, each of Tm₁ and Tm₂ represents the lower limit and upper limit of the melting point of the additives.

Hereinafter, the method of producing the molding material will be described in detail.

The molding material of the present embodiment contains a polymer which is used for an optical component selected from an fθ lens, an imaging lens, and a light guide plate and has an alicyclic structure in a portion or all of repeating structural units and additives. Moreover, at least a portion of the additives is present on the surface of the particles containing the polymer.

The molding material of the present embodiment is preferably obtained by attaching powder of [2] onto the surface of pellets of the following [1].
[1] Pellets including a resin composition which contains the hindered amine-based light stabilizer in an amount of 0.25 parts by mass to 10 parts by mass and the phosphorus-based stabilizer in an amount of 0.01 parts by mass to 5 parts by mass, based on 100 parts by mass of the polymer selected from polymers represented by General Formula (1)
[2] Powder (not containing a hindered amine-based light stabilizer) containing at least one or more kinds of additives selected from the phenol-based stabilizer and the higher fatty acid metal salt

Herein, it is desirable that pellets of [1] include a resin composition which contains the hindered amine-based light stabilizer in an amount of 0.25 parts by mass to 10 parts by mass, preferably in an amount of 0.3 parts by mass to 5 parts by mass, and more preferably in an amount 0.5 parts by mass to 3 parts by mass, the phosphorus-based stabilizer in an amount of 0.01 parts by mass to 5 parts by mass, preferably in an amount of 0.02 parts by mass to 2 parts by mass, and more preferably in an amount of 0.05 parts by mass to 1 part by mass, based on 100 parts by mass of the polymer selected from polymers represented by General Formula (1). The pellets are obtained by mixing the resin composition by using the Henschel mixer or the like and making particles by using an extruder or the like.

In order to produce the molding material of the present embodiment, first, it is preferable to coat at least one or more kinds of additives selected from the phenol-based stabilizer and the higher fatty acid metal salt onto the outside of the pellets including the resin composition which contains the hindered amine-based light stabilizer in an amount of 0.25 parts by mass to 10 parts by mass and the phosphorus-based stabilizer in an amount of 0.01 parts by mass to 5 parts by mass, based on 100 parts by mass of the polymer selected from polymers represented by General Formula (1). More preferably, the amount of at least one or more kinds of the additives that are to be coated and selected from the phenol-based stabilizer and the higher fatty acid metal salt is 0.01 parts by mass to 50 parts by mass and preferably 0.04 parts by mass to 20 parts by mass, based on 100 parts by mass of the pellets. Even more preferably, during coating, at least one or more kinds of additives selected from the powdery phenol-based stabilizer and higher fatty acid metal salt are attached onto the surface of the pellets. Herein, the word "attached" refers to a state where powder is held on the surface of another powder by an anchor effect, surface tension, an electrostatic force, and the like.

Examples of the method of attaching the additives in a solid state at room temperature onto the surface of the pellets include a method of mixing the pellets with the additives by using a known blender such as the Henschel mixer or a tumbler blender, a method of adding the additives to a pneumatic transport pipe of the pellets by using an in-line external addition device, a method of spraying the additives that are dissolved or dispersed in advance in a solvent to the pellet surface to coat the pellet, and then drying the resultant, and the like. Herein, the word "attached" refers to a state where powder is held on the surface of another powder by an anchor effect, surface tension, an electrostatic force, and the like.

For the molding material of the present embodiment, it is preferable that the pellets to which the additives in a solid state at room temperature have been attached be heated at a temperature lower than the melting point of the polymer constituting the pellets, whereby the additives in a solid state at room temperature are fused onto the surface of the pellets, that is, the additives in a solid state at room temperature are stuck onto the surface of the pellets. Though not particularly limited, the heating time is 5 minutes to 24 hours and preferably 10 minutes to 12 hours.

In addition, for the molding material of the present embodiment, preferably, provided that the range of the melting point of at least one or more kinds of additives selected from the phenol-based stabilizer and the higher fatty acid metal salt is Tm₁ (lower limit, unit: °C) to Tm₂ (upper limit, unit: °C), the pellets coated with at least one or more kinds of the additives selected from the phenol-based stabilizer and the higher fatty acid metal salt are heated at a temperature which is equal to or higher than (Tm₁ - 20) °C and equal to or lower than (Tm₂ + 20)°C and preferably equal to or higher than (Tm₁ - 15) °C and equal to or lower than (Tm₂ + 15) °C and is lower than the melting point of the polymer constituting the pellets. In this manner, at least one or more kinds of the additives selected from the phenol-based stabilizer and the higher fatty acid metal salt are fused onto the surface of the pellets. That is, if at least one or more kinds of the additives selected from the phenol-based stabilizer and the higher fatty acid metal salt are heated at the above specific temperature, at least one or more kinds of the additives selected from the phenol-based stabilizer and the higher fatty acid metal salt are stuck onto the surface of the pellet. Though not particularly limited, the heating time is 5 minutes to 24 hours and preferably 10 minutes to 12 hours.

Examples of the method of fusing the additives in a solid state at room temperature onto the pellet surface include a method in which pellets to which substances other than the above polymer in a solid state at room temperature have been attached in advance by the above method or the like are dried and heated simultaneously by a known drier, a method in which pellets with surface to which the additives in a solid state at room temperature have been attached in a pneumatic transport device by using the in-line external addition device are heated using an in-line thermal treatment device such as a dual pipe heater, and the like.

In this manner, it is possible to prevent detachment of the powdery additives in a solid state at room temperature that have been attached onto the surface of the pellets. Accordingly, even in a case where the pellets takes a strong impact, such as a case where the molding material is transported, the additives in a solid state at room temperature that are on the pellet surface are not detached. Consequently, the amount of the additives attached onto the pellet surface practically does not change, whereby the additives in a solid state at room temperature are held excellently.

Examples of the method of attaching the additives in a solid state at room temperature onto the surface of the pellets include a method of mixing the pellets with the additives by using a known blender such as the Henschel mixer or a tumbler mixer, and the like.

### (Total light transmittance and spectral light transmittance)

When being utilized for optical use, the molded product of the present embodiment is essentially required for transmitting light. Accordingly, it is preferable that the light transmittance thereof be excellent. The light transmittance is specified by spectral light transmittance or total light transmittance, according to the use.

If it is supposed that the molded product will be used in the region of the total light or in the region of plural wavelengths, the total light transmittance thereof needs to be excellent. The total light transmittance in a state where an anti-reflection film is not provided onto the molded product surface is 85% or higher and preferably 88% to 93%. If the total light transmittance is 85% or higher, it is possible to secure light in a necessary amount. Known methods are applicable as the method of measuring the total light transmittance, and the measurement device is not limited. Examples of the method include a method in which a thermoplastic amorphous resin is formed into a sheet having a thickness of 3 mm, and the total light transmittance of a sheet obtained by molding the molding material of the present embodiment is measured using a haze meter, based on ASTM D1003.

In addition, in a case of an optical system used only in a certain wavelength region, for example, in a case of a laser optical system, the molded product can be used as long as the spectral light transmittance thereof in this wavelength region is excellent, even if the total light transmittance thereof is not high. In this case, the spectral light transmittance at used wavelength of the molded product in a state where an anti-reflection film is not provided onto the surface thereof is preferably 85% or higher and more preferably 86% to 93%. If the spectral light transmittance is 85% or higher, it is possible to secure light in a necessary amount. Known methods are applicable as the measurement method and device, and specific examples thereof include a spectrophotometer.

The molded product including the molding material of the present embodiment exhibits excellent light transmittance with respect to light of a wavelength of 450 nm to 800 nm.

In addition, when the molded product is used as an optical component, if a known anti-reflection film is provided onto the surface thereof, the light transmittance can be further improved.

### (Molded product)

Since the molded product obtained from the molding material of the present embodiment has a surface in which the formation of a dent is inhibited, appearance quality thereof is excellent. Accordingly, the molded product can be used as an optical component in an optical system that needs to identify images with a high accuracy. The optical component refers to a component used for instruments of optical systems and the like, and specific examples thereof include an fθ lens used in a laser beam printer or the like, an imaging lens of cameras, a light guide plate used in liquid crystal display or the like.

The molding material of the present embodiment is molded into the shape of a sphere, a rod, a plate, a cylinder, a barrel, a tube, fiber, a film, a sheet, and the like, and can be used in, for example, the above various shapes.

The method of molding the molding material to obtain a molded product is not particularly limited, and known methods can be used. For example, injection molding, extrusion molding, blow molding, vacuum molding, slush molding, and the like are applicable, though the method varies with the use and shape. Among these, in view of moldability and productivity, injection molding is preferable. In addition, the molding conditions are appropriately selected according to the usage purpose and the molding method. For example, the temperature of a resin in injection molding is appropriately selected generally in a range of 150°C to 400°C, preferably in a range of 200°C to 350°C, and more preferably in a range of 230°C to 330°C.

Hereinafter, the fθ lens, imaging lens, and light guide plate for which the molding material of the present embodiment is suitably used will be described.

### (fθ lens)

The fθ lens is a lens used in an optical scanning device using a method of performing optical scanning by collecting light as light spots on the plane to be scanned. Provided that a height of an image is Y, a focal distance of a lens is f, and an angle of incidence to a lens is θ, a relational expression of Y = fθ is created. Therefore, this lens was named an fθ lens. Moreover, a general camera lens is defined by a relational expression of Y=f·tanθ.

The optical scanning device using the fθ lens deflects a light flux at an angular velocity by using an optical deflector having deflecting and reflecting planes, and collects light as light spots on the plane to be scanned by using the fθ lens, thereby performing scanning. The fθ lens is widely known in connection with various image forming apparatuses such as an optical printer and a digital copy machine.

If there is a dent on the surface of the fθ lens, light is refracted, and the image becomes blurry. Consequently, the image cannot be identified well. In the molding material of the present embodiment, the formation of a dent on the surface can be inhibited. Therefore, the molding material can be suitably used for the fθ lens in which a dent is easily formed on the surface due to injection molding and for which accuracy of image identification is required.

### (Imaging lens)

The imaging lens is obtained by setting plural lenses into a lens barrel, and is used by being installed in a camera. In recent years, imaging lenses using a solid-state imaging device such as a CCD image sensor or a CMOS image sensor have been mounted on communication devices such as a mobile phone and PDA and diffused rapidly. Due to the use thereof, the imaging lenses are required to be further miniaturized.

As the imaging lens is getting miniaturized, and as the image quality and the number of pixels are getting heightened, imaging lenses in which the formation of a dent on the surface is inhibited are required. In the molding material of the present embodiment, the formation of a dent on the surface can be inhibited. Accordingly, the molding material can be suitably used for the imaging lens in which a dent is easily formed on the surface due to injection molding and for which accuracy of image identification is required.

### (Light guide plate)

The light guide plate refers to a plate for causing light from a light source to be evenly and efficiently transmitted through a liquid crystal panel.

In recent years, regarding display devices, as the broadcasting mode has been transferred to terrestrial digital broadcasting, and as digital products have been diffused and developed, a thin planar display device represented by display devices in a laptop is diffused rapidly. One of the planar display devices is a liquid crystal display.

For displaying information, the liquid crystal display has a light source as a backlight that irradiates a liquid crystal panel with light and a light guide plate for causing light from the light source to be evenly and efficiently transmitted through the liquid crystal panel. As the liquid crystal display is getting enlarged, the light guide plate itself is also required to have a large area.

If there is a dent on the surface of the light guide plate, the amount of light changes, and problems arises in displaying information. The molding material of the present embodiment can inhibit a dent from being formed on the surface. Therefore, the molding material can be more suitably used in the light guide plate in which a dent is easily formed on the surface due to injection molding and for which stability of the light amount is required.

### (Example)

Hereinafter, the present embodiment will be described in more detail based on examples, but the present invention is not limited to the examples. The methods of measuring physical properties in the examples are as follows.

The methods of measuring physical properties in the examples are as follows.

### (Measurement method)

### (1) Melt flow index (MFR)

A melt flow rate was measured at 260°C under a load of 2.16 kg, based on ASTM D1238.

### (2) Softening temperature (TMA)

By using Thermal Mechanical Analyzer manufactured by DuPont, the softening temperature was measured by thermodeformational behavior of sheets having a thickness of 1 mm. A quartz needle was loaded on the sheet to apply a load of 49 g, and the temperature was increased at a rate of 5°C/min, whereby a temperature at which the needle was stabbed into the sheet by 0.635 mm was taken as a softening temperature.

### (3) Surface observation

The surface of the molded product was observed with a stereoscopic microscope (SZX16 manufactured by OLYMPUS CORPORATION) to evaluate whether there is a dent on the surface.

### (4) Measurement of insoluble fine particles

From the short shot product described later, 200 mg of small pieces of 35 mm × 65 mm × 3 mm were cut off, and 200 mg of the small pieces were dissolved by being dipped in 200 mL of cyclohexane at 23°C for 6 hours.

Thereafter, by using a particle counter for liquid (PAMAS, SVSS-C16/HCB-LD-25/25 manufactured by PAMAS), the concentration of insoluble fine particles having a particle size of equal to or larger than 1 µm and equal to or smaller than 2 µm contained in the cyclohexane was measured.

### (5) Measurement of melting point of additives

The melting point of the additives used was measured using Mettler FP melting point analyzer and an open capillary, under a condition of a temperature increase rate of 0.2°C/min.

### (6) Measurement of average particle size d₅₀ of additives

The average particle size d₅₀ of the additives used was measured using a wet dispersion unit (Hydro 2000SM(A)) of a laser diffraction type particle size distribution analyzer (Mastersizer 2000 manufactured by Malvern Instruments, Ltd.), based on volume. Decane was used as a dispersion medium.

### (7) Measurement of melt viscosity of additives

The melt viscosity of the additives used was measured using ARES manufactured by TA Instruments under the condition of a friction mode, nitrogen atmosphere, a shear speed of 100 sec⁻¹, and 130°C.

### (Method of external addition)

### (1) Attachment

The pellets having been dried under reduced pressure and the additives were put in a plastic bag. The plastic bag was inflated by being filled with nitrogen gas, the opening thereof was tied up, and the plastic bag was shaken such that uniformity was formed in the bag, thereby attaching the additives to the pellet. The amount of the attached additives was calculated from the weight of the pellet and the weight of the stabilizer put in the plastic bag.

### (2) Fusion

The pellets having been dried under reduced pressure and the additives were put in a plastic bag. The plastic bag was inflated by being filled with nitrogen gas, the opening thereof was tied up, and the plastic bag was shaken such that uniformity was formed in the bag, thereby attaching the additives to the pellet. The pellets were transferred into a vat and heated in nitrogen at 130°C for 2 hours to attach the additives to the pellets. The amount of the attached additives was calculated from the weight of the pellet and the weight of the stabilizer put in the plastic bag.

### (Method of evaluation)

By using an injection molding machine (ROBOSHOT S2000i-30α manufactured by FANUC CORPORATION), short shot products (filling rate 70%) were molded, and whether there is a dent was evaluated. The results are shown in Tables 1 and 2.
A: No dent on the surface
B: A slight dent on the surface was observed.
C: A dent on the surface was markedly observed

### (Example 1)

According to the above attachment method, 0.10 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 147°C and a MFR of 37g/10 min and included a copolymer (hereinafter, called an ethylene·tetracyclododecene copolymer; a ratio of ethylene/tetracyclododecene of 76/24 wt%)of tetracyclo[4.4.0.1^{2,5}.1^{7,10}]-3-dodecene and ethylene. By using an injection molding machine (ROBOSHOT S2000i-30α manufactured by FANUC CORPORATION), the pellets were molded into a short shot product (filling rate 70%).

### (Example 2)

According to the above attachment method, 0.05 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 147°C and a MFR of 37g/10 min and included an ethylene·tetracyclododecene copolymer (a ratio of ethylene/tetracyclododecene of 76/24 wt%), and a short shot product was obtained in the same manner as in Example 1.

### (Example 3)

According to the above attachment method, 0.10 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 130°C and a MFR of 35 g/10 min and included an ethylene·tetracyclododecene copolymer (a ratio of ethylene/tetracyclododecene of 71/29 wt%), and a short shot product was obtained in the same manner as in Example 1.

### (Example 4)

According to the above fusion method, 0.10 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 130°C and a MFR of 35 g/10 min and included an ethylene·tetracyclododecene copolymer (a ratio of ethylene/tetracyclododecene of 71/29 wt%), and a short shot product was obtained in the same manner as in Example 1.

### (Comparative example 1)

Pellets having been dried under reduced pressure that had a TMA of 147°C and a MFR of 37 g/10 min and included an ethylene·tetracyclododecene copolymer (ratio of ethylene/tetracyclododecene ratio of 76/24 wt%) were molded into a short shot product (filling rate 70%) by using an injection molding machine (ROBOSHOT S2000i-30α manufactured by FANUC CORPORATION).

### (Comparative example 2)

Pellets having been dried under reduced pressure that had a TMA of 130°C and a MFR of 35 g/10 min and included an ethylene·tetracyclododecene copolymer (ratio of ethylene/tetracyclododecene ratio of 71/29 wt%) were molded into a short shot product (filling rate 70%) by using an injection molding machine (ROBOSHOT S2000i-30α manufactured by FANUC CORPORATION).

**[Table 1]**

| | Example 1 | Example 2 | Example 3 | Example 4 | Comparative example 1 | Comparative example 2 |
|---|---|---|---|---|---|---|
| TMA | 147 | 147 | 130 | 130 | 147 | 130 |
| MFR | 37 | 37 | 35 | 35 | 37 | 35 |
| Amount of externally added additive [phr] | 0.10 | 0.05 | 0.10 | 0.10 | N/A | N/A |
| Method of external addition | Attachment | Attachment | Attachment | Fusion | - | - |
| Number of insoluble fine particles [number/ML] | 28 | 67 | Not measured | Not measured | 768 | Not measured |
| Surface dent | A | A | A | A | C | C |

As Table 1 shows clearly, if the molding material of the present embodiment is used, the formation of a dent on the molding surface is inhibited. Accordingly, the molding material of the present embodiment can be suitably used as a molding material for an optical component that is easily influenced by the dent on the surface and is selected from an fθ lens, an imaging lens, and a light guide plate.

### (Example 5)

According to the above attachment method, 0.05 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 147°C and a MFR of 37 g/10 min and included an ethylene·tetracyclododecene copolymer (a ratio of ethylene/tetracyclododecene of 76/24 wt%), and a short shot product was obtained in the same manner as in Example 1.

### (Example 6)

According to the above attachment method, 0.10 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 147°C and a MFR of 37 g/10 min and included an ethylene·tetracyclododecene copolymer (a ratio of ethylene/tetracyclododecene of 76/24 wt%), and a short shot product was obtained in the same manner as in Example 1.

### (Example 7)

According to the fusion attachment method, 0.10 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 147°C and a MFR of 37 g/10 min and included an ethylene·tetracyclododecene copolymer (a ratio of ethylene/tetracyclododecene of 76/24 wt%), and a short shot product was obtained in the same manner as in Example 1.

### (Example 8)

According to the above attachment method, 0.03 parts by mass of a phenol-based stabilizer (Irganox 1010 manufactured by BASF, melt viscosity at 130°C: 184 mPa·s, average particle size: 280 µm, melting point: 110°C to 125°C) was attached to 100 parts by mass of pellets having been dried under reduced pressure that had a TMA of 147°C and a MFR of 37 g/10 min and included an ethylene·tetracyclododecene copolymer (a ratio of ethylene/tetracyclododecene of 76/24 wt%), and a short shot product was obtained in the same manner as in Example 1.

### (Comparative example 3)

Pellets having been dried under reduced pressure that had a TMA of 147°C and a MFR of 37 g/10 min and included an ethylene·tetracyclododecene copolymer (ratio of ethylene/tetracyclododecene ratio of 76/24 wt%) were molded into a short shot product (filling rate 70%) by using an injection molding machine (ROBOSHOT S2000i-30α manufactured by FANUC CORPORATION).

**[Table 2]**

| | Example 5 | Example 6 | Example 7 | Example 8 | Comparative example 3 |
|---|---|---|---|---|---|
| TMA | 147 | 147 | 147 | 147 | 147 |
| MFR | 37 | 37 | 37 | 37 | 37 |
| Amount of externally added additive [phr] | 0.05 | 0.10 | 0.10 | 0.03 | N/A |
| Method of external addition | Attachment | Attachment | Fusion | Attachment | - |
| Number of insoluble fine particles [number/ML] | 67 | 28 | 65 | 167 | 768 |
| Surface dent | A | A | A | B | C |

As Tables 1 and 2 show clearly, in the molding material of the present embodiment, the formation of a dent on the molding surface is inhibited. Accordingly, the molding material of the present embodiment can be suitably used for an optical component that is easily influenced by the dent on the surface and is selected from an fθ lens, an imaging lens, and a light guide plate.

The present invention may also include the following embodiments.

(a1) A molding material which contains a polymer having an alicyclic structure in a portion or all of repeating structural unit and is for an optical component selected from an fθ lens, an imaging lens, and a light guide plate, wherein any one of a phenol-based stabilizer and a higher fatty acid metal salt is present on the surface of particles including the polymer.
(a2) The molding material according to (a1), wherein provided that the amount of the polymer contained in the molding material is 100 parts by mass, any one of the phenol-based stabilizer and the higher fatty acid salt is present on the surface of the particles, in an amount of 3 parts by mass to 50 parts by mass.
(a3) The molding material according to (a1), wherein provided that the total amount of the molding material is 100 parts by mass, any one of the phenol-based stabilizer and the higher fatty acid metal salt is present on the surface of the particles, in an amount of 3 parts by mass to 50 parts by mass.
(a4) The molding material according to any of (a1) to (a3), wherein any one of the phenol-based stabilizer and the higher fatty acid metal salt is fused onto the surface of the particles.
(a5) The molding material according to (a4) that is obtained by heating the particles with surface onto which any one of the phenol-based stabilizer and the higher fatty acid metal salt has been attached, at a temperature equal to or higher than (Tm₁ - 20) °C and equal to or lower than (Tm₂ + 20) °C (herein, Tm₁ and Tm₂ respectively represent the lower limit temperature and the upper limit temperature of a melting point of the phenol-based stabilizer or the higher fatty acid metal salt).
(a6) The molding material according to any of (a1) to (a5), wherein the polymer is a cyclic olefin-based polymer having one or more kinds of structures represented by the following General Formula (1). 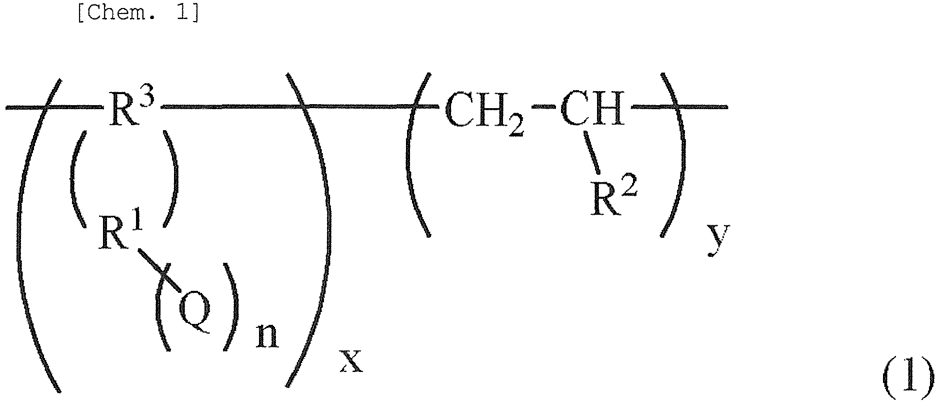
   (In the formula, x and y represent a copolymerization ratio and are real numbers satisfying 0/100 ≤ y/x ≤ 95/5. x and y are based on mole.
   n represents a number of substituents of a substituent Q and is a real number satisfying 0 ≤ n ≤ 2.
   R¹ represents a group which has a valency of 2 + n and is selected from a group consisting of hydrocarbon groups having 2 to 20 carbon atoms.
   R² represents a hydrogen atom or a monovalent group selected from a group consisting of hydrocarbon groups having 1 to 10 carbon atoms.
   R³ represents a quadrivalent group selected from a group consisting of hydrocarbon groups having 2 to 10 carbon atoms.
   Q represents COOR⁴ (R⁴ represents a hydrogen atom or a monovalent group selected from a group consisting of hydrocarbon groups having 1 to 10 carbon atoms).
   One kind of R¹, R², R³, and Q may be contained respectively in the polymer, or two or more kinds of these may be contained in the polymer at any ratio.)
(a7) The molding material according to any of (a1) to (a5), wherein the polymer is a cyclic olefin-based polymer having one or more kinds of structures represented by the following General Formula (2). 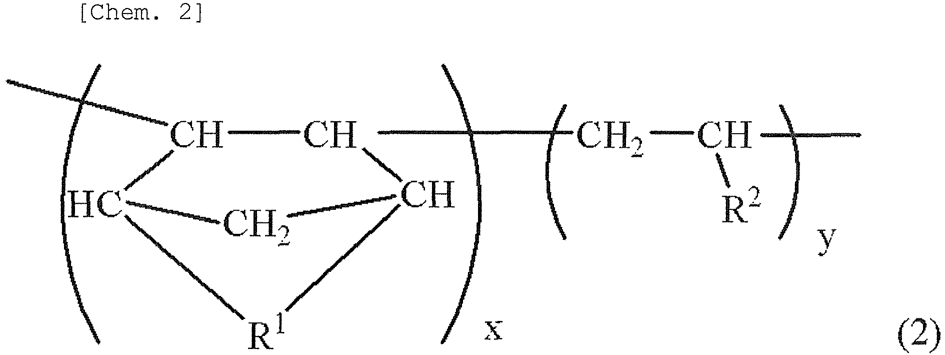
   (In the formula, R¹ represents a divalent group selected from a group consisting of hydrocarbon groups having 2 to 20 carbon atoms.
   R² represents a hydrogen atom or a monovalent group selected from a group consisting of hydrocarbon groups having 1 to 10 carbon atoms.
   One kind of R¹ and R² may be contained respectively in the polymer, or two or more kinds of these may be contained in the polymer at any ratio.
   x and y represent a copolymerization ratio and are real numbers satisfying 5/95 ≤ y/x ≤ 95/5. x and y are based on mole.)
(a8) The molding material according to any of (a1) to (a5), wherein the polymer is a copolymer including tetracyclo [4.4.0.1^{2,5}, 1^{7,10}]-3-dodecene and ethylene.
(a9) A molded product obtained by performing injection molding on the molding material according to any of (a1) to (a8).
(a10) An optical component including the molded product according to (a9).
(a11) An fθ lens, an imaging lens, or a light guide plate using the optical component according to (a10).
(a12) A method of producing a molding material which contains a polymer having an alicyclic structure in a portion or all of repeating structural units and is for an optical component selected from an fθ lens, an imaging lens, and a light guide plate, including a step of attaching any one of a phenol-based stabilizer or a higher fatty acid metal salt onto the surface of the particles, or a step of attaching and then fusing any one of the phenol-based stabilizer and the higher fatty acid metal salt onto the surface of the particles, wherein any one of the phenol-based stabilizer and the higher fatty acid metal salt is present on the surface of the particles including the polymer.
(a13) The method of producing a molding material according to (a12), wherein provided that the amount of the polymer contained in the molding material is 100 parts by mass, the step of attaching any one of the phenol-based stabilizer and the higher fatty acid metal salt includes a step of attaching any one of the phenol based stabilizer and the higher fatty acid metal salt in an amount of 3 parts by mass to 50 parts by mass onto the surface of the particles.
(a14) The method of producing a molding material according to (a12) or (a13), wherein the step of attaching any one of the phenol-based stabilizer and the higher fatty acid metal salt onto the surface of the particles includes a step of fusing any one of the phenol-based stabilizer and the higher fatty acid metal salt onto the surface of the particles by heating the particles with surface onto which any one of the phenol-based stabilizer and the higher fatty acid metal salt has been attached, at a temperature equal to or higher than (Tm₁ - 20)°C and equal to or lower than (Tm₂ + 20)°C (herein, Tm₁ and Tm₂ respectively represent the lower limit temperature and the upper limit temperature of a melting point of the phenol-based stabilizer or the higher fatty acid metal salt).

The present invention may also include the following embodiments.
(b1) A molding material which contains a polymer having an alicyclic structure in a portion or all of repeating structural units and is for an optical component selected from an fθ lens, an imaging lens, and a light guide plate, wherein substances other than the polymer are present on the surface of particles including the polymer.
(b2) The molding material according to (b1), wherein the substances other than the polymer are at least one or more kinds selected from a phenol-based stabilizer, a higher fatty acid metal salt, an antioxidant, an ultraviolet absorber, a hindered amine-based light stabilizer, a hydrochloric acid absorber, a metal deactivator, an antistatic agent, an anti-fog agent, a lubricant, a slip agent, a nucleating agent, a plasticizer, and a flame retardant.
(b3) The molding material according to (b1) or (b2), wherein provided that the amount of the polymer contained in the molding material is 100 parts by mass, the substances other than the polymer are present on the surface of the particles, in an amount of 0.01 parts by mass to 50 parts by mass.
(b4) The molding material according to (b1) or (b2), wherein provided that the total amount of the molding material is 100 parts by mass, the substances other than the polymer are present on the surface of the particles, in an amount of 0.01 parts by mass to 50 parts by mass.
(b5) The molding material according to any of (b1) to (b4), wherein the substances other than the polymer are fused onto the surface of the particles.
(b6) The molding material according to (b5) that is obtained by heating the particles with surface onto which the substances other than the polymer have been attached, at a temperature equal to or higher than (Tm₁ - 20) °C and equal to or lower than (Tm₂ + 20) °C (herein, Tm₁ and Tm₂ respectively represent the lower limit temperature and the upper limit temperature of a melting point of the phenol-based stabilizer or the higher fatty acid metal salt).
(b7) The molding material according to any of (b1) to (b6), wherein the polymer is a cyclic olefin-based polymer having one or more kinds of structures represented by the following General Formula (1). 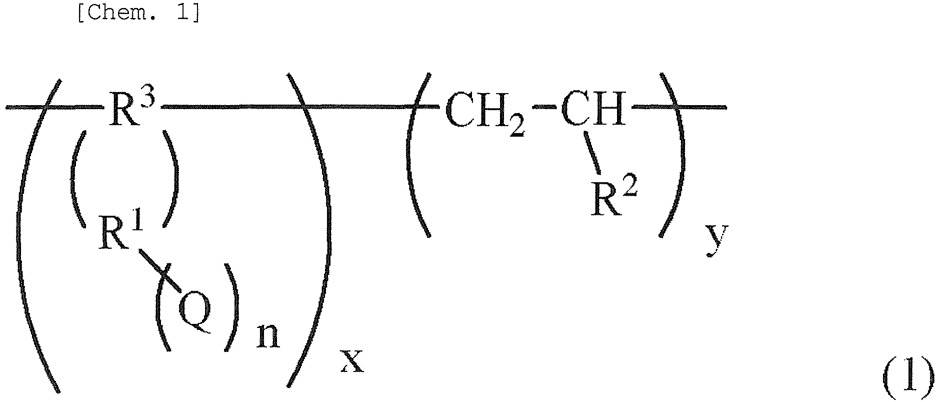
   (In the formula, x and y represent a copolymerization ratio and are real numbers satisfying 0/100 ≤ y/x ≤ 95/5. x and y are based on mole.
   n represents a number of substituents of a substituent Q and is a real number satisfying 0 ≤ n ≤ 2.
   R¹ represents a group which has a valency of 2 + n and is selected from a group consisting of hydrocarbon groups having 2 to 20 carbon atoms.
   R² represents a hydrogen atom or a monovalent group selected from a group consisting of hydrocarbon groups having 1 to 10 carbon atoms.
   R³ represents a quadrivalent group selected from a group consisting of hydrocarbon groups having 2 to 10 carbon atoms.
   Q represents COOR⁴ (R⁴ represents a hydrogen atom or a monovalent group selected from a group consisting of hydrocarbon groups having 1 to 10 carbon atoms).
   One kind of R¹, R², R³, and Q may be contained respectively in the polymer, or two or more kinds of these may be contained in the polymer at any ratio.)
(b8) The molding material according to any of (b1) to (b6), wherein the polymer is a cyclic olefin-based polymer having one or more kinds of structures represented by the following General Formula (2). 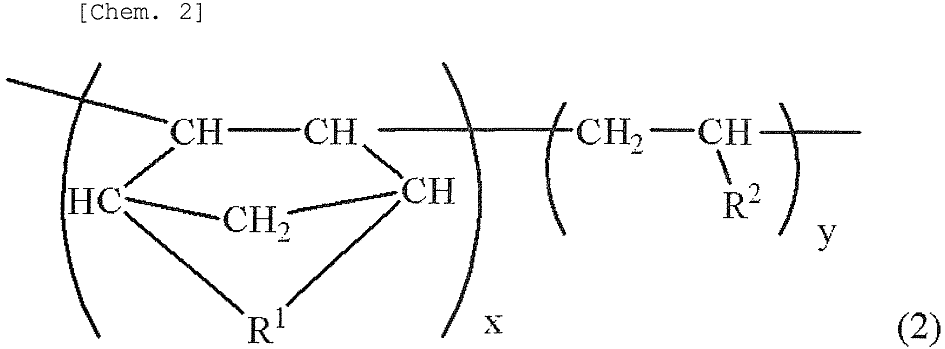
   (In the formula, R¹ represents a divalent group selected from a group consisting of hydrocarbon groups having 2 to 20 carbon atoms.
   R² represents a hydrogen atom or a monovalent group selected from a group consisting of hydrocarbon groups having 1 to 10 carbon atoms.
   One kind of R¹ and R² may be contained respectively in the polymer, or two or more kinds of these may be contained in the polymer at any ratio.
   x and y represent a copolymerization ratio and are real numbers satisfying 5/95 ≤ y/x ≤ 95/5. x and y are based on mole.)
(b9) The molding material according to any of (b1) to (b6), wherein the polymer is a copolymer including tetracyclo[4.4.0.1^{2,5}, 1^{7,10}]-3-dodecene and ethylene.
(b10) A molded product obtained by performing melt molding on the molding material according to any of (b1) to (b9).
(b11) An optical component including the molded product according to (b10).
(b12) An fθ lens, an imaging lens, or a light guide plate using the optical component according to (b11).
(b13) A method of producing a molding material which contains a polymer having an alicyclic structure in a portion or all of repeating structural units and is for an optical component selected from an fθ lens, an imaging lens, and a light guide plate, including a step of attaching substances other than the polymer onto the surface of particles, or a step of attaching and then fusing the substances other then the polymer onto the surface of the particles, wherein the substances other than the polymer are present on the surface of the particles including the polymer.
(b14) The method of producing a molding material according to (b13), wherein provided that the amount of the polymer contained in the molding material is 100 parts by mass, the step of attaching any one of the substances other than the polymer includes a step of attaching the substances other than the polymer in an amount of 0.01 parts by mass to 50 parts by mass onto the surface of the particles.
(b15) The method of producing a molding material according to (b13) or (b14), wherein the step of attaching the substances other than the polymer onto the surface of the particles includes a step of fusing the substances other than the polymer onto the surface of the particles by heating the particles with surface onto which the substances other than the polymer have been attached, at a temperature equal to or higher than (Tm₁ - 20) °C and equal to or lower than (Tm₂ + 20)°C (herein, Tm₁ and Tm₂ respectively represent the lower limit temperature and the upper limit temperature of a melting point of the substances other than the polymer).

The present application claims priority based on Japanese Patent Application No. 2011-150329 filed on July 6, 2011 and Japanese Patent Application No. 2011-156945 filed on July 15, 2011, the entire contents of which are incorporated herein.

## Claims

1. A molded product which is used for an optical component selected from an fθ lens, an imaging lens, and a light guide plate and
comprising:
a polymer having an alicyclic structure in a portion or all of repeating structural units,
wherein when the molded product is dipped in cyclohexane at a concentration of 1 g/mL at 23°C for 6 hours under stirring, a number of insoluble fine particles contained in the cyclohexane and having a particle size of equal to or larger than 1 µm and equal to or smaller than 2 µm that is measured by a liquid-borne particle counter is equal to or less than 200 particles/ml.

2. The molded product according to Claim 1,
wherein the polymer is a cyclic olefin-based polymer having one or more kinds of structures represented by the following General Formula (1). 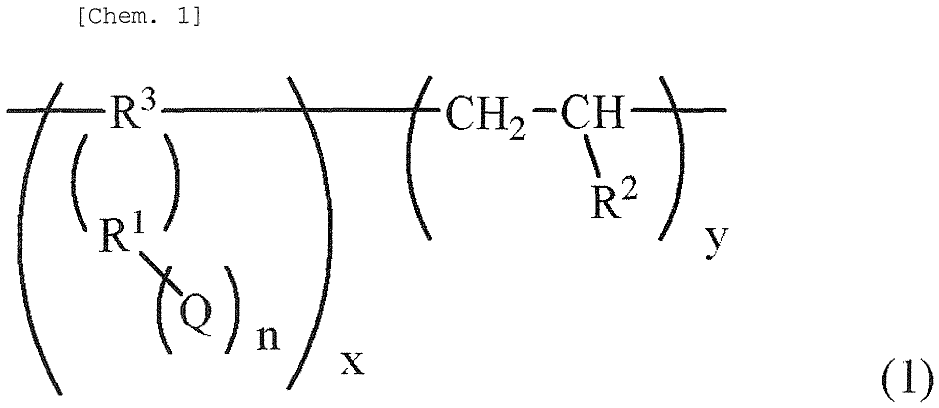
(In the formula, x and y represent a copolymerization ratio and are real numbers satisfying 0/100 ≤ y/x ≤ 95/5. x and y are based on mole.
n represents a number of substituents of a substituent Q and is a real number satisfying 0 ≤ n ≤ 2.
R¹ represents a group which has a valency of 2 + n and is selected from a group consisting of hydrocarbon groups having 2 to 20 carbon atoms.
R² represents a hydrogen atom or a monovalent group selected from a group consisting of hydrocarbon groups having 1 to 10 carbon atoms.
R³ represents a quadrivalent group selected from a group consisting of hydrocarbon groups having 2 to 10 carbon atoms.
Q represents COOR⁴ (R⁴ represents a hydrogen atom or a monovalent group selected from a group consisting of hydrocarbon groups having 1 to 10 carbon atoms).
One kind of R¹, R², R³, and Q may be contained respectively in the polymer, or two or more kinds of these may be contained in the polymer at any ratio.)

3. The molded product according to Claim 1,
wherein the polymer is a cyclic olefin-based polymer having one or more kinds of structures represented by the following General Formula (2). 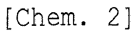 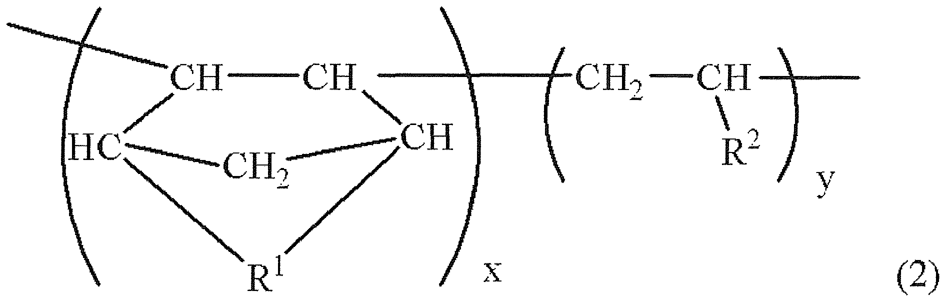
(In the formula, R¹ represents a divalent group selected from a group consisting of hydrocarbon groups having 2 to 20 carbon atoms.
R² represents a hydrogen atom or a monovalent group selected from a group consisting of hydrocarbon groups having 1 to 10 carbon atoms.
One kind of R¹ and R² may be contained respectively in the polymer, or two or more kinds of these may be contained in the polymer at any ratio.
x and y represent a copolymerization ratio and are real numbers satisfying 5/95 ≤ y/x ≤ 95/5. x and y are based on mole.)

4. The molded product according to Claim 1,
wherein the polymer is a copolymer including tetracyclo[4.4.0.1^{2,5}.1^{7,10}]-3-dodecene and ethylene.

5. A molding material which is used for an optical component selected from an fθ lens, an imaging lens, and a light guide plate and comprising:
a polymer having an alicyclic structure in a portion or all of repeating structural units; and
additives,
wherein at least a portion of the additives is present on the surface of particles containing the polymer.

6. The molding material according to Claim 5,
wherein the particles containing the polymer are shaped like pellets.

7. The molding material according to Claim 5 or 6,
wherein the additives present on the surface of the particles are at least one or more kinds selected from a group consisting of a phenol-based stabilizer, a higher fatty acid metal salt, an antioxidant, an ultraviolet absorber, a hindered amine-based light stabilizer, a hydrochloric acid absorber, a metal deactivator, an antistatic agent, an anti-fog agent, a lubricant, a slip agent, a nucleating agent, a plasticizer, and a flame retardant.

8. The molding material according to any one of Claims 5 to 7,
wherein a melt viscosity at 130°C of the additives present on the surface of the particles is equal to or higher than 100 mPa·s and equal to or lower than 10000 mPa·s, and
an average particle size d₅₀ of the additives is equal to or less than 1000 µm.

9. The molding material according to any one of Claims 5 to 8,
wherein a value which is obtained by subtracting a temperature of a phase transition point of the additives present on the surface of the particles from a temperature of a phase transition point of the polymer is equal to or higher than -100°C and equal to or lower than 140°C.

10. The molding material according to any one of Claims 5 to 9,
wherein provided that the amount of the polymer contained in the molding material is 100 parts by mass, the additives are present on the surface of the particles, in an amount ranging from 0.01 parts by mass to 50 parts by mass.

11. The molding material according to any one of Claims 5 to 10,
wherein provided that the total amount of the molding material is 100 parts by mass, the additives are present on the surface of the particles, in an amount ranging from 0.01 parts by mass to 50 parts by mass.

12. The molding material according to any one of Claims 5 to 11,
wherein the additives are fused onto the surface of the particles.

13. The molding material according to Claim 12 that is obtained by heating the particles with surface onto which the additives are attached, at a temperature equal to or higher than (Tm₁ - 20) °C and equal to or lower than (Tm₂ + 20) °C (herein, Tm₁ and Tm₂ respectively represent the lower limit and the upper limit of a melting point of the additives).

14. The molding material according to any one of Claims 5 to 13, 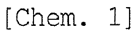 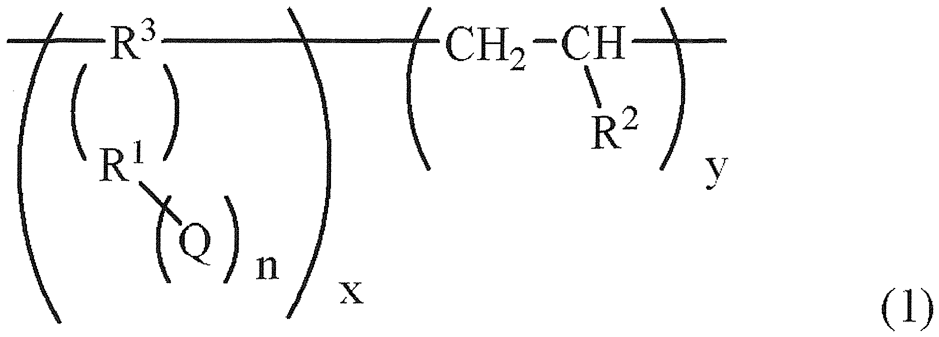
(In the formula, x and y represent a copolymerization ratio and are real numbers satisfying 0/100 ≤ y/x ≤95/5. x and y are based on mole.
n represents a number of substituents of a substituent Q and is a real number satisfying 0 ≤ n ≤ 2.
R¹ represents a group which has a valency of 2 + n and is selected from a group consisting of hydrocarbon groups having 2 to 20 carbon atoms.
R² represents a hydrogen atom or a monovalent group selected from a group consisting of hydrocarbon groups having 1 to 10 carbon atoms.
R³ represents a quadrivalent group selected from a group consisting of hydrocarbon groups having 2 to 10 carbon atoms.
Q represents COOR⁴ (R⁴ represents a hydrogen atom or a monovalent group selected from a group consisting of hydrocarbon groups having 1 to 10 carbon atoms).
One kind of R¹, R², R³, and Q may be contained respectively in the polymer, or two or more kinds of these may be contained in the polymer at any ratio.)

15. The molding material according to any one of Claims 5 to 13,
wherein the polymer is a cyclic olefin-based polymer having one or more kinds of structures represented by the following General Formula (2). 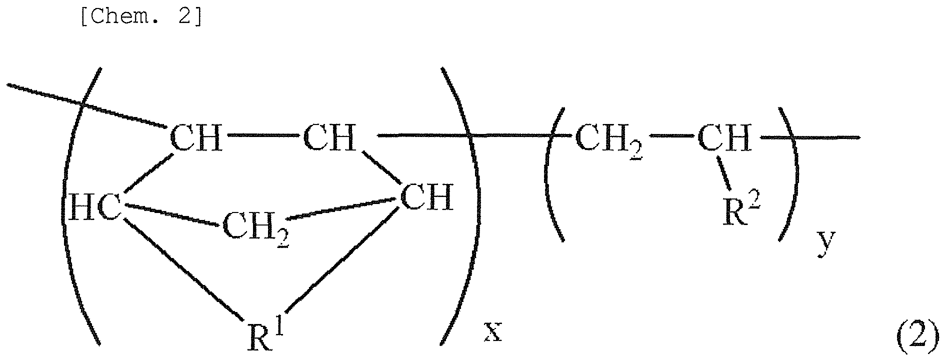
(In the formula, R¹ represents a divalent group selected from a group consisting of hydrocarbon groups having 2 to 20 carbon atoms.
R² represents a hydrogen atom or a monovalent group selected from a group consisting of hydrocarbon groups having 1 to 10 carbon atoms.
One kind of R¹ and R² may be contained respectively in the polymer, or two or more kinds of these may be contained in the polymer at any ratio.
x and y represent a copolymerization ratio and are real numbers satisfying 5/95 ≤ y/x ≤ 95/5. x and y are based on mole.)

16. The molding material according to any one of Claims 5 to 13,
wherein the polymer is a copolymer including tetracyclo[4.4.0.1^{2,5}.1^{7,10}]-3-dodecene and ethylene.

17. A molded product obtained by performing melt molding on the molding material according to any one of Claims 5 to 16.

18. An optical component comprising the molded product according to Claim 17.

19. The optical component according to Claim 18 that is an fθ lens, an imaging lens, or a light guide plate.

20. A method of producing the molding material according to any one of Claims 5 to 16, comprising:
a step of attaching the additives onto the surface of the particles; or
a step of attaching the additives onto the surface of the particles and then fusing the additives onto the surface of the particles.

21. The method of producing the molding material according to Claim 20,
wherein in the step of attaching the additives, provided that the amount of the polymer contained in the molding material is 100 parts by mass, the additives are attached onto the surface of the particles, in an amount ranging from 0.01 parts by mass to 50 parts by mass.

22. The method of producing the molding material according to Claim 20 or 21,
wherein in the step of fusing the additives to the particles, the particles with surface onto which the additives have been attached are heated at a temperature ranging from (Tm₁ - 20) °C to (Tm₂ + 20) °C such that the additives are fused onto the surface of the particles (herein, Tm₁ and Tm₂ respectively represent the lower limit and the upper limit of a melting point of the additives).
